# EUROPEAN PATENT APPLICATION

(11) **EP 4 692 214 A1**
(43) Date of publication of application: **11.02.2026**
(21) Application number: 24779785.5
(22) Date of filing: 19.03.2024
(51) Int. Cl.: C08L 23/26, B32B 27/00, C08L 75/04, C09J 123/26, C09J 175/04

(54) **RESIN COMPOSITION, WATER-BASED RESIN COMPOSITION, WATER-BASED ADHESIVE, AND LAMINATE**

(30) Priority: 30.03.2023 JP 2023055921
(71) Applicant: TOYOBO MC Corporation, Osaka-shi, Osaka 530-0001 (JP)
(72) Inventor: FUJIMOTO, Motoki, Takasago-shi, Hyogo 676-0082 (JP); KASHIHARA, Kenji, Takasago-shi, Hyogo 676-0082 (JP)
(74) Representative: Vossius & Partner Patentanwälte Rechtsanwälte mbB
(86) International application number: PCT/JP2024/010864
(87) International publication number: WO 2024/203662

(57) **Abstract**

The present invention provides a resin composition that has high adhesive strength at room temperature and that has sufficient adhesive strength even at high temperatures. Specifically, the present invention provides a resin composition containing an acid-modified polyolefin resin (A) and a polyurethane resin (B), in which the content of the polyurethane resin (B) is 20 parts by mass or more and 100 parts by mass or less per 100 parts by mass of the acid-modified polyolefin resin (A), and in which the acid-modified polyolefin resin (A) contains an acid-modified polyolefin resin (a) having a melting point of 90°C or higher and an acid-modified polyolefin resin (b) having a melting point below 90°C.

## Description

### Technical Field

The present invention relates to a resin composition, an aqueous resin composition, a water-based adhesive, and a laminate.

### Background Art

Conventionally, polyolefin substrates have been used for molded products of automotive interior materials, and a method of laminating a skin material on such a polyolefin substrate is known to improve surface design, texture, and feel. On the back of the skin material (i.e., the side bonded to a polyolefin substrate), olefin foam, urethane foam, or such foams with a base fabric on their surface are used in view of cushioning properties and other factors.

For example, rubber-based adhesives using chloroprene rubber, styrene rubber, or the like have been used to bond a polyolefin substrate and a skin material (see Patent Literature (PTL) 1 and Patent Literature (PTL) 2). Such rubber-based adhesives are usually used by dissolving various rubber components, tackifiers, etc. in a solvent.

In recent years, from environmental and hygiene perspectives, water-based adhesives that do not contain organic solvents have been proposed. For example, Patent Literature (PTL) 3 describes a water-based adhesive composition containing an acid-modified polyolefin resin and a core-shell curing agent.

### Citation List

### Patent Literature

Patent Literature (PTL) 1: JP H01-114431A
Patent Literature (PTL) 2: JP 2018-168227A
Patent Literature (PTL) 3: JP 2011-1444A

### Summary of Invention

### Technical Problem

However, the rubber-based adhesives described in PTL 1 and PTL 2 are difficult to use as water-based adhesives. It is also difficult for water-based adhesives to achieve sufficient adhesive strength because they do not penetrate the substrate through solvents.

The water-based adhesive composition described in PTL 3 is limited to bonding of a skin material to a polyolefin substrate and has a problem of poor adhesive strength at high temperatures when used for automotive interior applications.

The present invention has been made in view of the above. An object of the present invention is to provide a resin composition that has high adhesive strength at room temperature and that has sufficient adhesive strength even at high temperatures.

### Solution to Problem

As a result of intensive research to achieve the above object, the present inventors found that the object can be achieved by a composition containing an acid-modified polyolefin resin having a specific melting point and a polyurethane resin in a specific ratio, and have accomplished the present invention.

The present invention includes, for example, the subject matter described below.
Item 1. A resin composition comprising
an acid-modified polyolefin resin (A) and
a polyurethane resin (B),
wherein the content of the polyurethane resin (B) is 20 parts by mass or more and 100 parts by mass or less per 100 parts by mass of the acid-modified polyolefin resin (A), and
wherein the acid-modified polyolefin resin (A) comprises an acid-modified polyolefin resin (a) having a melting point of 90°C or higher and an acid-modified polyolefin resin (b) having a melting point below 90°C.

### Advantageous Effects of Invention

The resin composition of the present invention has high adhesive strength at room temperature and has sufficient adhesive strength even at high temperatures. Furthermore, the present invention can provide an aqueous resin composition comprising the resin composition, a water-based adhesive containing the aqueous resin composition, and a laminate formed by using the water-based adhesive.

### Description of Embodiments

Preferred embodiments of the present invention are described below in detail. The constituent elements may be explained below based on typical embodiments and specific examples; however, the present invention is not limited to these embodiments.

In the present specification, the expressions "contain" and "comprise" encompass the concepts of "containing", "including", "consisting essentially of", and "consisting of."

In the graduated numerical ranges described in the present specification, the upper or lower limit of the numerical range of one instance can be freely combined with the upper or lower limit of the numerical range of another instance. Further, in the numerical ranges described in the present specification, the upper or lower limits of the numerical ranges may be replaced with the values shown in the Examples or with values that can be unambiguously derived from the Examples. Further, in the present specification, the numerical values connected by "to" mean the numerical range including the numerical values before and after "to" as the lower limit and the upper limit.

In the present specification, "A and/or B" means "either A or B" or "both A and B." Specifically, it means "A", "B", or "A and B."

In the present specification, "(meth)acrylic" encompasses both acrylic and methacrylic.

In the present specification, "room temperature" refers to a temperature within the range of 20°C to 25°C.

In the present specification, "high temperature" refers to a temperature within the range of 90°C to 180°C.

### 1. Resin Composition

The resin composition of the present embodiment has the following structural features (I) to (III):
(I) the resin composition comprises an acid-modified polyolefin resin (A) and a polyurethane resin (B); and
(II) the content of the polyurethane resin (B) is 20 parts by mass or more and 100 parts by mass or less per 100 parts by mass of the acid-modified polyolefin resin (A); and
(III) the acid-modified polyolefin resin (A) comprises an acid-modified polyolefin resin (a) having a melting point of 90°C or higher and an acid-modified polyolefin resin (b) having a melting point below 90°C.

Based on having the structural features (I) to (III) described above, the resin composition of the present embodiment has high adhesive strength at room temperature and sufficient adhesive strength at high temperatures.

### Acid-modified Polyolefin Resin (A)

In the present embodiment, the acid-modified polyolefin resin (A) comprises an acid-modified polyolefin resin (a) having a melting point of 90°C or higher and an acid-modified polyolefin resin (b) having a melting point below 90°C. The combined use of the acid-modified polyolefin resin (a) and the acid-modified polyolefin resin (b) that have different melting points enhances adhesion to a polyolefin substrate and improves adhesive strength at high temperatures.

In the present specification, an acid-modified polyolefin resin (a) having a melting point of 90°C or higher and an acid-modified polyolefin resin (b) having a melting point below 90°C may be referred to as "the acid-modified polyolefin resin (a)" and "the acid-modified polyolefin resin (b)," respectively.

In one embodiment, the acid-modified polyolefin resin (A) preferably contains an acid-modified polyolefin resin (a) having a melting point of 90°C or higher and one or two acid-modified polyolefin resins (b) having melting points below 90°C.

In one embodiment, it is preferable that the acid-modified polyolefin resin (A) is a polymer obtained by subjecting an α,β-unsaturated carboxylic acid or an acid anhydride thereof to graft polymerization onto both a polyolefin resin having a melting point of 90°C or higher and a polyolefin resin having a melting point below 90°C. In other words, the acid-modified polyolefin resin (A) is preferably a graft copolymer having such a structure that α,β-unsaturated carboxylic or an anhydride thereof is grafted onto both a polyolefin resin having a melting point of 90°C or higher and a polyolefin resin having a melting point below 90°C.

The polyolefin resin usually comprises a structural unit derived from an α-olefin. Examples of α-olefins include unsaturated hydrocarbon components having two or more carbon atoms. Specific examples of α-olefins include ethylene, propylene, 1-butene, 2-methyl-1-propene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene. These α-olefins can be used alone or in a combination of two or more. Among these α-olefins, ethylene, propylene, and 1-butene are preferred.

In one embodiment, examples of polyolefin resins comprising a structural unit derived from an α-olefin include homopolyethylene (ethylene homopolymer), homopolypropylene (propylene homopolymer), propylene-α-olefin copolymers, ethylene-α-olefin copolymers, poly-1-butene, and 1-butene-α-olefin copolymers. These polyolefin resins can be used alone or in a combination of two or more.

In one embodiment, preferable polyolefin resins include homopolyethylene, homopolypropylene, and propylene-α-olefin copolymers, with the propylene-α-olefin copolymers being more preferable. In one embodiment, the propylene-α-olefin copolymer to be used is preferably at least one member selected from the group consisting of ethylene-propylene copolymers, propylene-1-butene copolymers, and ethylene-propylene-1-butene copolymers, and more preferably a propylene-1-butene copolymer and/or an ethylene-propylene-1-butene copolymer.

In the present specification, "ethylene-propylene copolymer" refers to a copolymer comprising a structural unit derived from ethylene and a structural unit derived from propylene.

In the present specification, "propylene-1-butene copolymer" refers to a copolymer comprising a structural unit derived from propylene and a structural unit derived from 1-butene.

In the present specification, "ethylene-propylene-1-butene copolymer" refers to a copolymer comprising a structural unit derived from ethylene, a structural unit derived from propylene, and a structural unit derived from 1-butene.

In one embodiment, particularly preferable polyolefin resins are propylene-1-butene copolymers and ethylene-propylene-1-butene copolymers.

In one embodiment, the propylene component content (the content of the structural unit derived from propylene) in the propylene-α-olefin copolymer is preferably 50 mol% or more, more preferably 60 mol% or more, and even more preferably 70 mol% or more. When the content of the propylene component in the propylene-α-olefin copolymer is 50 mol% or more, better adhesion of the resin composition to a polyolefin substrate (in particular, a polypropylene substrate) is obtained.

In one embodiment, the α-olefin component content (the content of the structural unit derived from α-olefin) in the polyolefin resin that constitutes the acid-modified polyolefin resin (A) is preferably 90 mol% or more, more preferably 95 mol% or more, even more preferably 98 mol% or more, still even more preferably 99 mol% or more, and particularly preferably 100 mol%, from the standpoint of improving the adhesion of the resin composition to a polyolefin substrate (in particular, a polypropylene substrate). In one embodiment, it is particularly preferable that the polyolefin resin that constitutes the acid-modified polyolefin resin (A) consists of one or more α-olefin components.

The resin composition of the present embodiment contains the acid-modified polyolefin resin (a) having a melting point of 90°C or higher and therefore gains a relatively high cohesive force and improved heat resistance, thus having improved adhesive strength at high temperatures.

In one embodiment, from the standpoint of further improving the adhesive strength at high temperatures, the ethylene component content (the content of the structural unit derived from ethylene) in the acid-modified polyolefin resin (a) having a melting point of 90°C or higher is preferably 10 mol% or less, more preferably 9 mol% or less, even more preferably 8 mol% or less, still even more preferably 5 mol% or less, and particularly preferably 4 mol% or less.

In one embodiment, the ethylene component content of the acid-modified polyolefin resin composition (a) is preferably 1% or more, and more preferably 2% or more.

In one embodiment, from the standpoint of further improving the adhesive strength at high temperatures, the ethylene component content of the acid-modified polyolefin resin (a) having a melting point of 90°C or higher is preferably 10 mol% or less, 9 mol% or less, 8 mol% or less, 7 mol% or less, 6 mol% or less, 5 mol% or less, 4 mol% or less, 3.5 mol% or less, or 3 mol% or less, in ascending order of preference.

In one embodiment, from the standpoint of further improving the adhesive strength at high temperatures, the propylene component content of the acid-modified polyolefin resin (a) having a melting point of 90°C or higher is preferably more than 50 mol% and 99 mol% or less, more preferably 55 mol% or more and 98 mol% or less, even more preferably 60 mol% or more and 97 mol% or less, still even more preferably 65 mol% or more and 96 mol% or less, particularly preferably 70 mol% or more and 95 mol% or less, and most preferably 75 mol% or more and 94.5 mol% or less.

In one embodiment, from the standpoint of further improving the adhesive strength at high temperatures, the 1-butene component content of the acid-modified polyolefin resin (a) having a melting point of 90°C or higher is preferably 0.5 mol% or more and 30 mol% or less, more preferably 1.0 mol% or more and 28 mol% or less, even more preferably 1.25 mol% or more and 26 mol% or less, still more preferably 1.5 mol% or more and 24 mol% or less, particularly preferably 2.0 mol% or more and 22 mol% or less, and most preferably 2.5 mol% or more and 20 mol% or less.

In one embodiment, the total content of the propylene component and the 1-butene component (the total content of the structural unit derived from propylene and the structural unit derived from 1-butene) in the acid-modified polyolefin resin (a) having a melting point of 90°C or higher is preferably 80 mol% or more, more preferably 82 mol% or more, even more preferably 84 mol% or more, still even more preferably 86 mol% or more, particularly preferably 88 mol% or more, and most preferably 90 mol% or more.

In one embodiment, it is particularly preferable that the acid-modified polyolefin resin (a) having a melting point of 90°C or higher comprises an acid-modified polyolefin resin (a1) having a melting point of 90°C or higher and/or an acid-modified polyolefin resin (a2) having a melting point below 90°C,
the polyolefin resin that constitutes the acid-modified polyolefin resin (a1) is a propylene-1-butene copolymer, and
the polyolefin resin that constitutes the acid-modified polyolefin resin (a2) is an ethylene-propylene-1-butene copolymer.

The resin composition of the present embodiment contains the acid-modified polyolefin resin (b) having a melting point below 90°C, which improves wettability to a polyolefin substrate, thus increasing adhesion strength at the interface with the polyolefin substrate. Combined use of the acid-modified polyolefin resin (b) having a melting point below 90°C and the polyurethane resin (B) tends to enhance adhesion strength between a polyolefin substrate and a substrate of a type different from the polyolefin substrate.

In one embodiment, it is particularly preferable that the polyolefin resin that constitutes the acid-modified polyolefin resin (b) having a melting point below 90°C is a propylene-1-butene copolymer. In this case, the content ratio of the propylene component to the 1-butene component (propylene component/1-butene component) in the propylene-1-butene copolymer is preferably in the range of 50/50 to 95/5, more preferably 60/40 to 90/10, and even more preferably 70/30 to 85/15.

In one embodiment, the ethylene component content (the content of the structural unit derived from ethylene) in the acid-modified polyolefin resin (b) having a melting point of lower than 90°C is preferably 10 mol% or less, 9 mol% or less, 8 mol% or less, 7 mol% or less, 6 mol% or less, 5 mol% or less, 4 mol% or less, 3 mol% or less, 2 mol% or less, 1 mol% or less, 0.5 mol% or less, or 0.1 mol% or less, in ascending order of preference.

In one embodiment, the total content of the propylene component and the 1-butene component (the total content of the structural unit derived from propylene and the structural unit derived from 1-butene) in the acid-modified polyolefin resin (b) having a melting point below 90°C is preferably 90 mol% or more, more, preferably 95 mol% or more, even more preferably 97.5 mol% or more, still even more preferably 99 mol% or more, particularly preferably 99.5 mol% or more, and most preferably 99.9 mol% or more.

In one embodiment, it is particularly preferable that the acid-modified polyolefin resin (b) having a melting point below 90°C comprises an acid-modified polyolefin resin (b1) having a melting point below 90°C and/or an acid-modified polyolefin resin (b2) having a melting point below 90°C, that the polyolefin resin that constitutes the acid-modified polyolefin resin (b1) is a propylene-1-butene copolymer, and that the polyolefin resin that constitutes the acid-modified polyolefin resin (b2) is a propylene-1-butene copolymer.

In one embodiment, the (meth)acrylic acid ester component content of the acid-modified polyolefin resin (a) and the acid-modified polyolefin resin (b) is preferably 5 mol% or less, 3 mol% or less, 1 mol% or less, 0.5 mol% or less, 0.1 mol% or less, or 0 mol%, in ascending order of preference.

In one embodiment, it is particularly preferable that the acid-modified polyolefin resin (a) and the acid-modified polyolefin resin (b) contain no (meth)acrylic acid ester components.

In one embodiment, it is particularly preferable that the acid-modified polyolefin resin (a) and the acid-modified polyolefin resin (b) contain no acrylic ester components. When the acid-modified polyolefin resin (a) and the acid-modified polyolefin resin (b) contain an acrylic ester component, adhesion to the polyolefin resin substrate tends to significantly decrease.

In one embodiment, specific examples of the (meth)acrylic acid ester component include methyl (meth)acrylate, ethyl (meth)acrylate, and butyl (meth)acrylate.

In one embodiment, examples of the α,β-unsaturated carboxylic acid and an acid anhydride thereof that can be graft-polymerized onto polyolefin resin include maleic acid, maleic anhydride, itaconic acid, itaconic anhydride, citraconic acid, and citraconic anhydride. Among these, maleic anhydride is preferred.

In one embodiment, the acid-modified polyolefin resin (A) is preferably at least one member selected from the group consisting of maleic anhydride-modified polypropylene, maleic anhydride-modified ethylene-propylene copolymers, maleic anhydride-modified propylene-1-butene copolymers, and maleic anhydride-modified ethylene-propylene-1-butene copolymers, and more preferably at least one member selected from the group consisting of maleic anhydride-modified ethylene-propylene copolymers, maleic anhydride-modified propylene-1-butene copolymers, and maleic anhydride-modified ethylene-propylene-1-butene copolymers.

In one embodiment, the grafted amount (added amount) of α,β-unsaturated carboxylic acid and/or an acid anhydride thereof in the acid-modified polyolefin resin (a) having a melting point of 90°C or higher and the acid-modified polyolefin resin (b) having a melting point below 90°C is preferably 0.5 to 10 mass%, more preferably 0.7 to 6 mass%, even more preferably 0.8 to 3 mass%, and most preferably 1 to 2 mass%.

The method of graft-polymerizing α,β-unsaturated carboxylic acid and/or an anhydride thereof onto polyolefin resin can be a wide variety of known methods. Examples of such methods include a method in which a polyolefin resin is heated to a melting point or higher in the presence of a radical generator to melt the resin, and then allowed to react with α,β-unsaturated carboxylic acid and/or an anhydride thereof (the melting method); and a method in which a polyolefin resin is dissolved in an organic solvent and then heated and stirred in the presence of a radical generator to allow the resin to react with α,β-unsaturated carboxylic acid and/or an anhydride thereof (the solution method).

In one embodiment, the acid-modified polyolefin resin (a) having a melting point of 90°C or higher and the acid-modified polyolefin resin (b) having a melting point below 90°C preferably each have a mass average molecular weight (Mw) of 10,000 to 200,000, more preferably 20,000 to 180,000, even more preferably 30,000 to 160,000, still even more preferably 40,000 to 140,000, particularly preferably 50,000 to 110,000, and most preferably 60,000 to 100,000. When the Mw is 10,000 or higher, the resin composition tends to have a higher cohesive force and thus have excellent adhesion. On the other hand, when the Mw is 200,000 or less, the resin composition has improved flowability and thus become easy to handle during adhesion. The Mw of the acid-modified polyolefin resin (a) having a melting point of 90°C or higher and that of the acid-modified polyolefin resin (b) having a melting point below 90°C can be measured by gel permeation chromatography (GPC). The specific measurement method is explained in the Examples described below.

The method for producing the acid-modified polyolefin resin (a) having a melting point of 90°C or higher and the method for producing the acid-modified polyolefin resin (b) having a melting point below 90°C are not particularly limited. The methods can be a wide range of known methods. Examples of such methods include a radical graft reaction (a reaction in which a radical species is formed on a polymer that becomes a main chain, and α,β-unsaturated carboxylic acid or an acid anhydride thereof is graft-polymerized by using the radical species as a polymerization initiation point).

Examples of radical initiators used in the melt method and the solution method described above include organic peroxides and azo nitrile compounds. The radical initiator to be used is preferably an organic peroxide. Examples of organic peroxides include di-tert-butyl peroxyisophthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide. Specific examples of azo nitrile compounds include azobisisobutyronitrile and azobisisopropionitrile.

In one embodiment, the melting point of the acid-modified polyolefin resin (a) is preferably 95°C or higher. In one embodiment, the melting point of the acid-modified polyolefin resin (b) is preferably 85°C or lower, and more preferably 80°C or lower.

In one embodiment, the upper limit of the melting point of the acid-modified polyolefin resin (a) can be 180°C, 175°C, 170°C, 165°C, 160°C, 155°C, 150°C, 145°C, 140°C, 135°C, or 130°C, while the lower limit of the melting point of the acid-modified polyolefin resin (a) can be 90°C, 91°C, 92°C, 93°C, 94°C, or 95°C. These upper and lower limits can be freely combined.

In one embodiment, the melting point of the acid-modified polyolefin resin (a) is usually 90°C or higher and 180°C or lower, more preferably 91°C or higher and 170°C or lower, even more preferably 92°C or higher and 160°C or lower, still even more preferably 93°C or higher and 150°C or lower, particularly preferably 94°C or higher and 140°C or lower, and most preferably 95°C or higher and 130°C or lower.

In one embodiment, the upper limit of the melting point of the acid-modified polyolefin resin (b) can be 88°C, 86°C, 85°C, 84°C, 83°C, 82°C, 81°C, or 80°C, whereas the lower limit of the melting point of the acid-modified polyolefin resin (b) can be 55°C, 60°C, 62°C, 64°C, 66°C, 68°C, or 70°C. These upper limits and lower limits can be freely combined.

In one embodiment, the melting point of the acid-modified polyolefin resin (b) is usually 55°C or higher and 88°C or lower, more preferably 60°C or higher and 86°C or lower, even more preferably 62°C or higher and 85°C or lower, still more preferably 64°C or higher and 84°C or lower, particularly preferably 65°C or higher and 82°C or lower, and most preferably 70°C or higher and 80°C or lower.

In one embodiment, the lower limit of the difference in melting point between the acid-modified polyolefin resin (a) having a melting point of 90°C or higher and the acid-modified polyolefin resin (b) having a melting point below 90°C is preferably 5°C, more preferably 10°C, and even more preferably 15°C. The upper limit of the difference in melting point is usually 100°C, preferably 90°C, more preferably 80°C, even more preferably 70°C, still even more preferably 65°C, particularly preferably 60°C, and most preferably 55°C. These upper limits and lower limits can be freely combined. When the difference in melting point between the acid-modified polyolefin resin (a) having a melting point of 90°C or higher and the acid-modified polyolefin resin (b) having a melting point below 90°C is 5°C or more, the adhesion to the polyolefin substrate and the adhesive strength under high-temperature conditions are further improved.

In one embodiment, the difference in melting point between the acid-modified polyolefin resin (a) having a melting point of 90°C or higher and the acid-modified polyolefin resin (b) having a melting point below 90°C is preferably 5°C or higher and 100°C or lower, more preferably 8°C or higher and 80°C or lower, even more preferably 10°C or higher and 70°C or lower, still even more preferably 12°C or higher and 65°C or lower, particularly preferably 14°C or higher and 60°C or lower, and most preferably 15°C and more and 55°C or lower.

In one embodiment, the mass ratio of the acid-modified polyolefin resin (a) having a melting point of 90°C or higher and the acid-modified polyolefin resin (b) having a melting point below 90°C (acid-modified polyolefin resin (a)/acid-modified polyolefin resin (b)) is preferably in the range of 10/90 to 80/20, more preferably 15/85 to 75/25, even more preferably 20/80 to 70/30, still even more preferably 25/75 to 65/35, and particularly preferably 30/70 to 60/40. When the ratio of the acid-modified polyolefin resin (a) to the acid-modified polyolefin resin (b) is within the range of 10/90 to 80/2, further enhanced adhesive strength under high temperatures is achieved.

The melting points of the acid-modified polyolefin resin (a) and the acid-modified polyolefin resin (b) can be measured with a differential scanning calorimeter (DSC) in accordance with JIS K7121-2012. Specifically, using a DSC measurement device, two melting peaks are obtained by performing the following steps: after about 5 mg of a sample is maintained in a molten state at 150°C for 10 minutes, the sample is cooled at a temperature decreased rate of 10°C/min and stably maintained at -50°C, and then heated to 150°C at a temperature rise rate of 10°C/min to melt the sample, whereby two melting peaks are obtained. The two melting peak top temperatures thus obtained are evaluated as melting points of the acid-modified polyolefin resin (a) and the acid-modified polyolefin resin (b).

In one embodiment, the acid value of the acid-modified polyolefin resin (A) is preferably in the range of 2 to 50 mg KOH/g from the standpoint of further improving adhesion to polyolefin substrates and compatibility with the polyurethane resin (B). The acid value of the acid-modified polyolefin resin (A) is more preferably in the range of 3 to 40 mg KOH/g, even more preferably 4 to 30 mg KOH/g, and particularly preferably 5 to 20 mg KOH/g.

In the present specification, the "acid value (mgKOH/g) of the acid-modified polyolefin resin (A)" refers to the amount of KOH required to neutralize 1 g of a sample. The "acid value" means a value measured according to the test method of JIS K0070 (1992).

In one embodiment, it is preferable that the acid-modified polyolefin resin (a) having a melting point of 90°C or higher contains a 1-butene component, that the 1-butene component content of the acid-modified polyolefin resin (a) is 29.0 mol% or less, that the acid-modified polyolefin resin (b) having a melting point below 90°C contains a propylene component, and that the propylene component content of the acid-modified polyolefin resin (b) is 97.5 mol% or less.

In one embodiment, it is particularly preferable that (i) the acid-modified polyolefin resin (A) consists solely of one acid-modified polyolefin resin (a) having a melting point of 90°C or higher and one acid-modified polyolefin resin (b) having a melting point below 90°C, or (ii) the acid-modified polyolefin resin (A) consists solely of one acid-modified polyolefin resin (a) having a melting point of 90°C or higher and two acid-modified polyolefin resins (b) having melting points below 90°C.

### Polyurethane Resin (B)

The resin composition of the present embodiment contains a polyurethane resin (B). Based on containing a polyurethane resin (B), the resin composition of the present embodiment provides excellent adhesion between a polyolefin substrate and a substrate of a type different from polyolefin, such as urethane foam or polyvinyl chloride (PVC). The polyurethane resin (B) is a polymer having a urethane bond in its main chain. The polyurethane resin (B) can be obtained, for example, by a reaction between a polyol compound and a polyisocyanate compound.

In one embodiment, the polyurethane resin (B) preferably has an ester bond from the standpoint of further improving adhesion.

In one embodiment, the polyurethane resin (B) preferably has an anionic functional group from the standpoint of further improving stability in the production of the resin composition.

In another embodiment, the polyurethane resin (B) preferably has an ester bond (-C(=O)O-) or a carbonate bond (-O-C(=O)-O-).

The polyurethane resin (B) having an ester bond is a reaction product of a polyol compound and a polycarboxylic acid polyanhydride, and can be produced, for example, by molecular extension (chain extension) of a modified polyester resin having a hydroxy group at an end thereof with a polyisocyanate compound.

In one embodiment, the polyurethane resin (B) preferably has a hydroxy group at an end thereof, and more preferably has a structural unit derived from a polyol compound and has a hydroxy group at an end thereof.

Specific examples of the polyol compound include aliphatic polyols, such as ethylene glycol, diethylene glycol, propylene glycol, 1,4-butanediol, 1,5-pentanediol, 1,6-hexanediol, neopentyl glycol, polyethylene glycol, polytetramethylene glycol, 1,4-cyclohexanedimethanol, poly-1,2-butadiene polyol, poly-1,3-butadiene polyol, polyisoprene polyol, and hydrogenated polyols thereof; and aromatic polyols, such as bisphenol A, bisphenol F, dihydroxynaphthalene, and 1,4-benzenedimethanol.

For example, from the standpoint of availability and reactivity, the polycarboxylic acid polyanhydride is preferably a tetracarboxylic acid dianhydride. Specific examples of tetracarboxylic dianhydrides include pyromellitic dianhydride, benzophenone tetracarboxylic dianhydride, and ethylene glycol bis(trimellitic anhydride) ester.

The polyisocyanate compound to be used can be, for example, various compounds used in the polymerization of polyurethane resins. Specific examples of polyisocyanate compounds include tolylene didiisocyanate, 4,4'-diphenylmethane diisocyanate, 1,3-phenylene diisocyanate, hexamethylene diisocyanate, xylylene diisocyanate, 1,5-naphthalene diisocyanate, isophorone diisocyanate, dimethyl diisocyanate, lysine diisocyanate, 1,6-hexane diisocyanate, and hydrogenated products thereof.

The anionic functional group described above is a functional group that shows anionic properties. Specific examples of anionic functional groups include a hydroxy group, a carboxy group, a sulfonic acid group, a phosphonic acid group, and a phosphinic acid group. From the standpoint of productivity and ease of controlling the acid value, the anionic functional group is preferably a hydroxy group or a carboxy group. In the present specification, the -OH group contained in the carboxy group (-C(=O)-OH) is different from a hydroxy group.

In one embodiment, the polyurethane resin (B) preferably has a glass transition temperature (Tg) of 20°C or higher, more preferably 25°C or higher, and particularly preferably 30°C or higher. The Tg of polyurethane resin (B) is preferably 100°C or lower, more preferably 95°C or lower, and particularly preferably 90°C or lower. When the glass transition temperature of the polyurethane resin (B) is 30°C or higher, the heat resistance of the resin composition is further enhanced, and the adhesive strength at high temperatures tends to further increase.

The Tg of polyurethane resin (B) can be measured by using a differential scanning calorimeter (DSC) in accordance with JIS K7121-2012. Specifically, using a DSC measurement device about 5 mg of a sample is maintained at -50°C for 10 minutes and the temperature is raised to 150°C at a temperature rise rate of 10°C/min, whereby the glass transition temperature is determined as a temperature at which the curve of step-like changes in glass transition intersects with a line equidistant in the vertical direction from extended baseline lines.

In one embodiment, the Tg of the polyurethane resin (B) is preferably 20°C or higher and 100°C or lower, more preferably 25°C or higher and 95°C or lower, and particularly preferably 30°C or higher and 90°C or lower.

In one embodiment, a wide range of commercially available products known in the art can be used as the polyurethane resin (B). Specific examples of commercially available products of the polyurethane resins (B) include Super Flex 150HS (produced by Dai-ichi Kogyo Seiyaku Co., Ltd.), Takelac W-6110 (produced by Mitsui Chemicals, Inc.), Takelac W-5030 (produced by Mitsui Chemicals, Inc.), and U-coat UWS-145. These can be used alone or in a combination of two or more.

The resin composition of the present embodiment contains an acid-modified polyolefin resin (A) and a polyurethane resin (B).

In one embodiment, the acid-modified polyolefin resin (A) and the polyurethane resin (B) may be bonded together through a reaction. In one embodiment, it is preferable that an acid functional group of the acid-modified polyolefin resin (A) and a hydroxy group at a polyol end of the polyurethane resin (B) are bonded through a reaction. Examples of such acid functional groups include carboxy groups; and carboxylic acid anhydride groups, such as succinic anhydride groups, phthalic anhydride groups, and maleic anhydride groups.

In the present embodiment, the content of the polyurethane resin (B) is 20 parts by mass or more, and 100 parts by mass or less, per 100 parts by mass of the acid-modified polyolefin resin (A). When the content of the polyurethane resin (B) is less than 20 parts by mass per 100 parts by mass of the acid-modified polyolefin resin (A), the adhesion between a polyolefin substrate and a substrate of a material different from the polyolefin substrate is insufficient. When the content of the polyurethane resin (B) exceeds 100 parts by mass per 100 parts by mass of the acid-modified polyolefin resin (A), the adhesion between a polyolefin substrate and a substrate of the same type as the polyolefin substrate is insufficient.

In one embodiment, the content of the polyurethane resin (B) is preferably 25 parts by mass or more and 95 parts by mass or less, more preferably 30 parts by mass or more and 85 parts by mass or less, even more preferably 35 parts by mass and 80 parts by mass or less, and particularly preferably 40 parts by mass or more and 75 parts by mass or less, per 100 parts by mass of the acid-modified polyolefin resin (A).

In one embodiment, the total content of the acid-modified polyolefin resin (A) and the polyurethane resin (B), based on the total mass of the resin composition, is preferably more than 50 mass%, 55 mass% or more, 60 mass% or more, 65 mass% or more, 70 mass% or more, 75 mass% or more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, or 99.99 mass% or more, in ascending order of preference.

### Organic Solvent

The resin composition of the present embodiment may contain an organic solvent. When the present invention contains an organic solvent, the amount of the organic solvent to be used is preferably 50 to 1500 parts by mass, more preferably 80 to 1000 parts by mass, and even more preferably 100 to 800 parts by mass, per 100 parts by mass of the resin composition. When the resin composition of the present embodiment contains an organic solvent, the viscosity of the resin composition is further reduced to thereby further improve the coating properties.

Examples of organic solvents include aromatic hydrocarbons, such as benzene, toluene, and xylene; aliphatic hydrocarbons, such as hexane, heptane, octane, and decane; alicyclic hydrocarbons, such as cyclohexane, cyclohexene, methylcyclohexane, and ethylcyclohexane; halogenated hydrocarbons, such as trichloroethylene, dichloroethylene, chlorobenzene, and chloroform; alcoholic solvents, such as methanol, ethanol, isopropyl alcohol, butanol, pentanol, 1-hexanol, 2-ethylhexanol, ethylene glycol, propanediol, 2-methylcyclohexanol, phenol, and 2-heptyl alcohol; ketone solvents, such as acetone, methyl isobutyl ketone, methyl ethyl ketone, pentanone, hexanone, cyclohexanone, isophorone, and acetophenone; cellosolve solvents, such as methyl cellosolve and ethyl cellosolve; ester solvents, such as methyl acetate, ethyl acetate, butyl acetate, methyl propionate, ethyl propionate, and butyl formate; and ether solvents, such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, tetraethylene glycol mono-n-butyl ether, dibenzyl ether, diphenyl ether, and butyl phenyl ether. These can be used alone or in a combination of two or more.

### 2. Aqueous Resin Composition

The aqueous resin composition of the present embodiment comprises an aqueous medium and the resin composition of the present embodiment, wherein the resin composition is dispersed in the aqueous medium. The details of the resin composition according to the present embodiment are as described above in "1. Resin Composition" unless otherwise specified. The aqueous resin composition according to the present embodiment is suitable for use as a water-based adhesive.

Examples of the method for producing the aqueous resin composition according to the present embodiment include the following methods:
- a production method comprising mixing an aqueous dispersion containing an acid-modified polyolefin resin (A) dispersed in an aqueous medium and an aqueous dispersion containing a polyurethane resin (B) dispersed in an aqueous medium;
- a production method comprising dispersing both an acid-modified polyolefin resin (A) and a polyurethane resin (B) in an aqueous dispersion; and
- a production method comprising dispersing in a aqueous medium a resin composition obtained by bonding an acid-modified polyolefin resin (A) and a polyurethane resin (B) through a reaction.

In addition to the above, other examples of the method for producing the aqueous resin composition according to the present embodiment include the following:
- a production method comprising neutralizing an acid functional group (e.g., a carboxy group or an acid anhydride group) in the acid-modified polyolefin resin (A) and an anionic functional group in the polyurethane resin (B) with a basic compound, followed by heating and stirring in a aqueous medium;
- a production method comprising neutralizing an acid functional group in the acid-modified polyolefin resin (A) and an anionic functional group in the polyurethane resin (B) with a basic compound, heating and stirring in a mixed medium of water and an organic solvent, cooling, and then removing the organic solvent;
- a production method comprising mixing an acid-modified polyolefin resin (A) and a polyurethane resin (B) with an emulsifier in a aqueous medium and mechanically emulsifying the mixture by kneading using a homogenizer or similar equipment; and
- a production method comprising dissolving an acid-modified polyolefin resin (A), a polyurethane resin (B), and an emulsifier in an organic solvent and water, adding a basic compound, cooling, and then removing the organic solvent.
Examples of the acid functional group include a carboxy group; and carboxylic anhydride groups, such as a succinic anhydride group, a phthalic anhydride group, and a maleic anhydride group.

In one embodiment, the aqueous medium is preferably water. Examples of water include natural water, purified water, distilled water, ion-exchanged water, and pure water. In one embodiment, the aqueous medium is particularly preferably ion-exchanged water.

In one embodiment, the amount of the aqueous medium used is usually 100 parts by mass or more and 500 parts by mass or less per 100 parts by mass of the acid-modified polyolefin resin (A).

In one embodiment, the amount of the aqueous medium used is usually 100 parts by mass or more and 1000 parts by mass or less per 100 parts by mass of the polyurethane resin (B).

Examples of the basic compound include ammonia or organic amine compounds. Specific examples of organic amine compounds include monomethylamine, dimethylamine, trimethylamine, monoethylamine, diethylamine, triethylamine, mono-n-propylamine, dimethyl-n-propylamine, monoethanolamine, diethanolamine, triethanolamine, N-methylethanolamine, N-aminoethylethanolamine, N-methyldiethanolamine, monoisopropanolamine, diisopropanolamine, triisopropanolamine, N,N-dimethylethanolamine, and N,N-dimethylpropanolamine.

In one embodiment, the amount of the base compound is preferably 0.5 parts by mass or more, more preferably 1 part by mass or more, and even more preferably 2 parts by mass or more, per 100 parts by mass of the total of the acid-modified polyolefin resin (A) and the polyurethane resin (B).

In one embodiment, the amount of the basic compound to be used is preferably 10 parts by mass or less, more preferably 9 parts by mass or less, even more preferably 8 parts by mass or less, and particularly preferably 7 parts by mass or less, per 100 parts by mass of the total of the acid-modified polyolefin resin (A) and the polyurethane resin (B).

In one embodiment, from the standpoint of achieving better storage stability without excessively increasing the particle size of the dispersed particles, the amount of the basic compound to be used is preferably 0.5 parts by mass or more and 10 parts by mass or less per 100 parts by mass of the total of the acid-modified polyolefin resin (A) and the polyurethane resin (B) .

In one embodiment, from the standpoint of achieving good adhesion, the Z-average particle size of the water dispersion of the acid-modified polyolefin resin (A) is preferably 200 nm or less, more preferably 170 nm or less, and particularly preferably 150 nm or less. The preferred lower limit of the Z-average particle size is usually 50 nm, preferably 75 nm, and more preferably 100 nm. The specific method for measuring the Z-average particle size is explained in the Examples described below.

In one embodiment, the aqueous dispersion of the acid-modified polyolefin resin (A) preferably has a pH of 7.0 or higher, more preferably 8.0 or higher, and even more preferably 8.5 or higher. The specific method for measuring the pH is explained in the Examples described below.

In one embodiment, from the standpoint of ease of handling the aqueous dispersion, the aqueous dispersion of the acid-modified polyolefin resin (A) preferably has a viscosity of 10 to 100 mPa·s, more preferably 15 to 80 Pa·s, and even more preferably 25 to 60 mPa·s. The specific method for measuring the viscosity is explained in the Examples described below.

In one embodiment, from the standpoint of achieving good adhesion, the Z-average particle size of the aqueous resin composition of the present embodiment is preferably 200 nm or less, more preferably 150 nm or less, and particularly preferably 130 nm or less. The lower limit of the Z-average particle size is usually 50 nm, preferably 75 nm, and more preferably 90 nm. The specific method for measuring the Z-average particle size is explained in the Examples described below.

In one embodiment, the aqueous resin composition according to the present embodiment preferably has a pH of 7.0 or higher, more preferably 7.5 or higher, and even more preferably 8.0 or higher. The specific method for measuring the pH is explained in the Examples described below.

In one embodiment, from the standpoint of ease of handling the aqueous resin composition, the solids concentration of the aqueous resin composition is preferably 15 to 45 mass%, more preferably 20 to 40 mass%, and even more preferably 25 to 35 mass%, based on the total amount of the aqueous resin composition.

In one embodiment, from the standpoint of ease of handling the aqueous resin composition, the aqueous resin composition preferably has a viscosity of 10 to 100 mPa·s, more preferably 15 to 75 mPa·s, and even more preferably 25 to 50 mPa·s. Specific methods for measuring the viscosity are explained in the Examples described below.

### Organic Solvent

The aqueous resin composition of the present invention may contain an organic solvent other than the aqueous medium as long as it does not affect the effects of the present invention. From the standpoint of obtaining a good aqueous resin composition, the organic solvent is preferably those having a solubility in water of 10 g/liter or more at 20°C.

The amount of the organic solvent to be used is preferably 10 parts by mass or less, more preferably 5 parts by mass or less, even more preferably 3 parts by mass or less, and particularly preferably 1 part by mass or less, per 100 parts by mass of the aqueous resin composition of the present embodiment. When the aqueous resin composition of the present embodiment contains an organic solvent, the aqueous resin composition of the present embodiment has reduced viscosity, which is advantageous in terms of improved coating. When the aqueous resin composition of the present embodiment contains no an organic solvent, it is preferable from an environmental perspective.

Examples of organic solvents include alcohol compounds, such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol; ketone compounds, such as methyl ethyl ketone, methyl isobutyl ketone, ethyl butyl ketone, and cyclohexanone; ether compounds, such as tetrahydrofuran and dioxane; ester compounds, such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, and dimethyl carbonate; glycol compounds, such as ethylene glycol monomethyl ether, ethylene glycol monoethyl ether, ethylene glycol monopropyl ether, ethylene glycol monobutyl ether, and ethylene glycol ethyl ether acetate; 1-methoxy-2-propanol; 1-ethoxy-2-propanol; 3-methoxy-3-methyl-1-butanol; methoxybutanol; acetonitrile; dimethylformamide; dimethylacetamide; diacetone alcohol; ethyl acetoacetate; 1,2-dimethylglycerine; 1,3-dimethylglycerine; trimethylglycerine; and N-methylpyrrolidone. These organic solvents can be used alone or in a combination of two or more.

### Optional Additives

The resin composition of the present embodiment and the aqueous resin composition of the present embodiment may contain various additives as long as the additives do not affect the effects of the present invention. Examples of such various additives include wetting agents, thickeners, tackifiers, plasticizers, stress relief agents, curing agents, curing accelerators, flame retardants, pigments, and anti-blocking agents.

### Surfactants

The resin composition of the present embodiment and the aqueous resin composition of the present embodiment may contain a surfactant as long as it does not affect the effects of the present invention. Examples of surfactants include nonionic surfactants, anionic surfactants, cationic surfactants, and amphoteric surfactants. From the standpoint of particle size of the dispersed particles and dispersion stability of the aqueous resin composition, nonionic surfactants and anionic surfactants are preferable, with nonionic surfactants being more preferable.

Examples of the nonionic surfactants include polyoxyethylene alkyl ethers, polyoxypropylene alkyl ethers, polyoxyethylene alkyl phenyl ethers, polyoxypropylene alkyl phenyl ethers, polyoxyethylene styrene-modified phenyl ethers, polyoxypropylene styrene-modified phenyl ethers, polyoxyethylene fatty acid esters, polyoxypropylene fatty acid esters, polyoxyethylene sorbitan fatty acid esters, polyoxypropylene sorbitan fatty acid esters, polyoxyethylene alkylamine ethers, polyoxypropylene alkylamine ethers, polyoxyethylene lanolin alcohol ethers, polyoxypropylene lanolin alcohol ethers, polyoxyethylene lanolin fatty acid esters, polyoxypropylene lanolin fatty acid esters, and (polyoxyethylene oxypropylene) block copolymers. These surfactants can be used alone or in a combination of two or more.

The nonionic surfactant can be a wide variety of commercially available products known to the public. Examples of commercially available products include the Emulmin series (produced by Sanyo Chemical Industries, Ltd.), the Noigen series (produced by Dai-ichi Kogyo Seiyaku Co., Ltd. (i.e., DKS Co., Ltd.), and the Blaunon series (produced by Aoki Oil Industrial Co., Ltd.). These surfactants can be used alone or in a combination of two or more.

Further, the nonionic surfactant can be a reactive surfactant having a polymerizable double bond in the molecule. Examples of such nonionic surfactants include Adeka Reasoap ER-10, ER-20, ER-30, and ER-40 series (produced by ADEKA Corporation). These surfactants can be used alone or in a combination of two or more.

Examples of such anionic surfactants include higher alkyl sulfate esters, alkyl aryl polyoxyethylene sulfate ester salts, higher fatty acid salts, alkyl aryl sulfonate salts, and alkyl phosphate ester salts. These surfactants can be used alone or in a combination of two or more.

The anionic surfactant can be a wide variety of known commercially available products. Examples of commercially available products include the Neocol series and the Hitenol series (produced by DKS Co., Ltd.). These surfactants can be used alone or in a combination of two or more.

The anionic surfactant can be a reactive surfactant having a polymerizable double bond in the molecule. Examples of such reactive surfactants include Adeka Riasoap NE-10, NE-20, NE-30, NE-40, and SE-10N series (produced by ADEKA Corporation), Aqualon RN-20, RN-30, RN-50, HS-10, and HS-20 series (produced by DKS Co., Ltd.), Eleminol JS-2 and Eleminol RS-30 (both produced by Sanyo Chemical Industries, Ltd.). These reactive surfactants can be used alone or in a combination of two or more.

In one embodiment, from the standpoints of the particle size of dispersed particles and dispersion stability of the aqueous resin composition, the amount of the surfactant used is preferably 60 parts by mass or less, more preferably 40 parts by mass or less, even more preferably 30 parts by mass or less, and still even more preferably 25 parts by mass or less, per 100 parts by mass of the acid-modified polyolefin resin (A).

The method of adding the surfactant is not particularly limited. The surfactant can be added when the acid-modified polyolefin resin is emulsified, or the surfactant can be added to the aqueous resin composition after emulsification.

The aqueous resin composition according to the present embodiment comprises an aqueous dispersion of an acid-modified polyolefin resin (A) and an aqueous dispersion of a polyurethane resin (B), wherein the content of the aqueous dispersion of polyurethane resin (B) is 20 parts by mass or more and 100 parts by mass per 100 parts by mass of the aqueous dispersion of the acid-modified polyolefin resin (A). The aqueous dispersion of the acid-modified polyolefin resin (A) preferably contains an aqueous dispersion of an acid-modified polyolefin resin (a) having a melting point of 90°C or higher and an aqueous dispersion of an acid-modified polyolefin resin (b) having a melting point below 90°C.

### 3. Water-based Adhesive

The water-based adhesive of the present invention comprises the water-based resin composition of the present embodiment. The details of the aqueous resin composition of the present embodiment are as described above in "2. Aqueous Resin Composition" unless otherwise specified.

In one embodiment, the proportion of the aqueous resin composition in the water-based adhesive is usually more than 50 mass%, preferably 75 mass% or more, more preferably 90 mass% or more, even more preferably 95 mass% or more, still more preferably 99 mass% or more, still even more preferably 99.5 mass% or more, and particularly preferably 99.9 mass% or more.

The water-based adhesive of the present embodiment can be particularly suitable for use as an adhesive for automobile interiors.

### 4. Laminate

The laminate of the present embodiment is formed by bonding substrates of different types to each other using the water-based adhesive of the present embodiment or bonding substrates of the same type to each other using the water-based adhesive of the present embodiment.

The laminate of the present embodiment usually comprises at least three layers: substrate layer A, an adhesive layer, and substrate layer B. The laminate structure includes, for example, laminates having the following structures: substrate layer A, an adhesive layer, and substrate layer B; or substrate layer B, an adhesive layer, or substrate layer A. In these structures, substrate layer A and substrate layer B may be either layers composed of substrates of different types or layers composed of substrates of the same type. The adhesive layer is usually a layer containing the water-based adhesive of the present embodiment, and preferably a layer consisting solely of the water-based adhesive of the present embodiment.

In one embodiment, the thickness of the adhesive layer is preferably 0.5 to 25 µm, more preferably 1 to 20 µm, and even more preferably 2 to 15 µm.

The laminate of the present embodiment is preferably formed by bonding together one or more polyolefin substrates and/or one or more substrates of types different from polyolefin substrates by using the water-based adhesive of the present embodiment.

The laminate of the present embodiment is preferably formed by bonding polyolefin substrates of the same type together by using the water-based adhesive of the present embodiment.

In one embodiment, the polyolefin substrate to be used can be a wide variety of substrates made of known polyolefin resins that are usually used in this technical field. Examples of usable polyolefin resins include polyethylene, polypropylene (PP), ethylene-propylene copolymers, propylene-1-butene copolymers, and ethylene-propylene-1-butene copolymers.

In one embodiment, examples of substrates of the same type as polyolefin substrates include non-polar substrates, such as polyolefin substrates (e.g., olefin foam (OF) substrates and urethane foam substrates).

In one embodiment, examples of substrates of types different from polyolefin substrates include polar substrates, such as polyurethane substrates, polyvinyl chloride (PVC) substrates, ABS substrates, and polycarbonate substrates.

The method for producing the laminate of the present embodiment is, for example, a method comprising applying the water-based adhesive of the present embodiment to one side of each of the substrates of different types or each of the substrates of the same type, drying the coated surfaces, and then heat-bonding the coated surfaces of the substrates of different types or the coated surfaces of the substrates of the same type to each other.

### Use

The resin composition of the present embodiment and the aqueous resin composition of the present embodiment can be suitably used as primers for painting, printing, adhesion, and coatings; as well as paints, inks, coating agents, adhesives, etc.

In one embodiment, the water-based adhesive of the present embodiment shows good adhesion in (I) bonding a polyolefin substrate to a substrate of a type different from the polyolefin substrate, such as urethane foam or polyvinyl chloride (PVC), and in (II) bonding a polyolefin substrate to a substrate of the same type as the polyolefin substrate. Accordingly, the water-based adhesive of the present embodiment can be preferably used to produce a laminate formed by bonding substrates of different types together or bonding substrates of the same type together.

### Adhesive Strength

In the water-based adhesive of the present embodiment, the adhesive strength between a polyolefin substrate and a substrate of the same type as the polyolefin substrate at 25°C is preferably 7.0 (N/10 mm) or more, more preferably 10.0 (N/10 mm) or more.

In the water-based adhesive of the present embodiment, the adhesive strength between a polyolefin substrate and a substrate of a type different from the polyolefin substrate at 25°C is preferably 15.0 (N/10 mm) or more, more preferably 20.0 (N/10 mm) or more.

In the water-based adhesive of the present embodiment, the adhesive strength at 100°C between a polyolefin substrate and a substrate of the same type as the polyolefin substrate is preferably 4.0 (N/10 mm) or more, more preferably 6.0 (N/10 mm) or more.

In the water-based adhesive of the present embodiment, the adhesive strength at 100°C between a polyolefin substrate and a substrate of a type different from the polyolefin substrate is preferably 4.0 (N/10 mm) or more, and more preferably 6.0 (N/10 mm) or more.

The adhesive strength can be measured, for example, by pressure-bonding substrates with the water-based adhesive of the present embodiment at 150°C and 0.1 MPa for 60 seconds, allowing the bonded substrates to stand at 25°C overnight, then allowing the bonded substrates to stand at either 25°C or 100°C for 5 minutes, and then pulling the bonded substrates at a tensile speed of 200 mm/min.

The present invention provides the following embodiments of the present invention.

### Item 1.

A resin composition comprising
an acid-modified polyolefin resin (A) and
a polyurethane resin (B),
wherein the content of the polyurethane resin (B) is 20 parts by mass or more and 100 parts by mass or less per 100 parts by mass of the acid-modified polyolefin resin (A), and
wherein the acid-modified polyolefin resin (A) comprises an acid-modified polyolefin resin (a) having a melting point of 90°C or higher and an acid-modified polyolefin resin (b) having a melting point below 90°C.

### Item 2.

The resin composition according to Item 1, wherein the ratio by mass of the acid-modified polyolefin resin (a) to the acid-modified polyolefin resin (b) (the acid-modified polyolefin resin (a) / the acid-modified polyolefin resin (b)) is preferably in the range of 10/90 to 80/20, more preferably 15/85 to 75/25, even more preferably 20/80 to 70/30, still even more preferably 25/75 to 65/35, and particularly preferably 30/70 to 60/40.

### Item 3.

The resin composition according to Item 1 or 2, wherein the difference in melting point between the acid-modified polyolefin resin (a) and the acid-modified polyolefin resin (b) is preferably 5°C or higher, more preferably 10°C or higher, and even more preferably 15°C or higher.

### Item 4.

The resin composition according to any one of Items 1 to 3, wherein the acid-modified polyolefin resin (a) and the acid-modified polyolefin resin (b) preferably comprise an α-olefin component, and more preferably consist of at least one α-olefin component selected from the group consisting of an ethylene component, a propylene component, and a 1-butene component.

### Item 5.

The resin composition according to any one of Items 1 to 4, wherein
the acid-modified polyolefin resin (a) comprises a 1-butene component, the 1-butene component content of the acid-modified polyolefin resin (a) being 29.0 mol% or less, and
the acid-modified polyolefin resin (b) comprises a propylene component, the propylene component content of the acid-modified polyolefin resin (b) being 97.5 mol% or less.

### Item 6.

The resin composition according to any one of Items 1 to 5, wherein an ethylene component content of the acid-modified polyolefin resin (b) is preferably 10 mol% or less, 9 mol% or less, 8 mol% or less, 7 mol% or less, 6 mol% or less, 5 mol% or less, 4 mol% or less, 3 mol% or less, 2 mol% or less, 1 mol% or less, 0.5 mol% or less, or 0.1 mol% or less, in ascending order of preference.

### Item 7.

The resin composition according to any one of Items 1 to 6, wherein the total content of the propylene component and the 1-butene component in the acid-modified polyolefin resin (b) is preferably 90 mol% or more, more preferably 95 mol% or more, still more preferably 97.5 mol% or more, even more preferably 99 mol% or more, particularly preferably 99.5 mol% or more, and most preferably 99.9 mol% or more.

### Item 8.

The resin composition according to any one of Items 1 to 7, wherein the polyolefin resin that constitutes the acid-modified polyolefin resin (b) is a propylene-1-butene copolymer.

### Item 9.

The resin composition according to any one of Items 1 to 8, wherein the ethylene component content of the acid-modified polyolefin resin (a) is preferably 10 mol% or less, more preferably 9 mol% or less, even more preferably 8 mol% or less, still more preferably 5 mol% or less, and particularly preferably 4 mol% or less.

### Item 10.

The resin composition according to any one of Items 1 to 9, wherein the polyurethane resin (B) preferably has an ester bond or a carbonate ester bond, and more preferably has an ester bond.

### Item 11.

The resin composition according to any one of Items 1 to 10, wherein the (meth)acrylic acid ester component content of the acid-modified polyolefin resin (a) and the acid-modified polyolefin resin (b) is preferably 5 mol% or less, 3 mol% or less, 1 mol% or less, 0.5 mol% or less, 0.1 mol% or less, or 0 mol%.

### Item 12.

The resin composition according to Item 8, wherein the content ratio of the propylene component to the 1-butene component (propylene component/1-butene component) in the propylene-1-butene copolymer is preferably 50/50 to 95/5, more preferably 60/40 to 90/10, and even more preferably 70/30 to 85/15.

### Item 13.

The resin composition according to any one of Items 1 to 12, wherein the total content of the propylene component and the 1-butene component in the acid-modified polyolefin resin (a) is preferably 80 mol% or more, more preferably 82 mol% or more, still more preferably 84 mol% or more, even more preferably 86 mol% or more, particularly preferably 88 mol% or more, and most preferably 90 mol% or more.

### Item 14.

The resin composition according to any one of Items 1 to 13, wherein the polyolefin resin that constitutes the acid-modified polyolefin resin (a) is a propylene-1-butene copolymer or an ethylene-propylene-1-butene copolymer.

### Item 15.

The resin composition according to any one of Items 1 to 14, wherein the acid-modified polyolefin resin (A) comprises one acid-modified polyolefin resin (a) having a melting point of 90°C or higher and one or two acid-modified polyolefin resins (b) having a melting point below 90°C.

### Item 16.

The resin composition according to any one of Items 1 to 15, wherein
the acid-modified polyolefin resin (a) is a graft copolymer having a structure in which α,β-unsaturated carboxylic or an anhydride thereof is grafted onto a polyolefin resin having a melting point of 90°C or higher, and
the acid-modified polyolefin resin (b) is a graft copolymer having a structure in which an α,β-unsaturated carboxylic or an acid anhydride thereof is grafted onto a polyolefin resin having a melting point below 90°C.

### Item 17.

The resin composition according to Item 16, wherein the graft amount of the α,β-unsaturated carboxylic acid and acid anhydride thereof in the acid-modified polyolefin resin (a) and the acid-modified polyolefin resin (b) is preferably 0.5 to 10 mass%, more preferably 0.7 to 6 mass%, even more preferably 0.8 to 3 mass%, and most preferably 1 to 2 mass%.

### Item 18.

The resin composition according to Item 16 or 17, wherein the α,β-unsaturated carboxylic acid and acid anhydride thereof is preferably maleic acid, maleic anhydride, itaconic acid, itaconic anhydride, citraconic acid, or citraconic anhydride, and more preferably maleic anhydride.

### Item 19.

The resin composition according to any one of Items 1 to 18, wherein
the acid-modified polyolefin resin (a) having a melting point of 90°C or higher comprises either an acid-modified polyolefin resin (a1) having a melting point of 90°C or higher or an acid-modified polyolefin resin (a2) having a melting point of 90°C or higher, and
the polyolefin resin that constitutes the acid-modified polyolefin resin (a1) is a propylene-1-butene copolymer, and
the polyolefin resin that constitutes the acid-modified polyolefin resin (a2) is an ethylene-propylene-1-butene copolymer.

### Item 20.

The resin composition according to any one of Items 1 to 19, wherein the difference in melting point between the acid-modified polyolefin resin (a) having a melting point of 90°C or higher and the acid-modified polyolefin resin (b) having a melting point below 90°C is preferably 5°C or higher and 100°C or lower, more preferably 8°C or higher and 80°C or lower, even more preferably 10°C or higher and 70°C or lower, still even more preferably 12°C or higher and 65°C or lower, particularly preferably 14°C or higher and 60°C or lower, and most preferably 15°C or higher and 55°C or lower.

### Item 21.

The resin composition according to any one of Items 1 to 20, wherein
the acid-modified polyolefin resin (b) having a melting point below 90°C comprises an acid-modified polyolefin resin (b1) having a melting point below 90°C and/or an acid-modified polyolefin resin (b2) having a melting point below 90°C,
the polyolefin resin that constitutes the acid-modified polyolefin resin (b1) is a propylene-1-butene copolymer, and
the polyolefin resin that constitutes the acid-modified polyolefin resin (b2) is a propylene-1-butene copolymer.

### Item 22.

The resin composition according to any one of Items 1 to 21, wherein the acid-modified polyolefin resin (a) usually has a melting point of 90°C or higher and 180°C or lower, more preferably 91°C or higher and 170°C or lower, even more preferably 92°C or higher and 160°C or lower, still even more preferably 93°C or higher and 150°C or lower, particularly preferably 94°C or higher and 140°C or lower, and most preferably 95°C or higher and 130°C or lower.

### Item 23.

The resin composition according to any one of Items 1 to 22, wherein the melting point of the acid-modified polyolefin resin (b) is usually 55°C or higher and 88°C or lower, preferably 60°C or higher and 86°C or lower, more preferably 62°C or higher and 85°C or lower, even more preferably 64°C or higher and 84°C or lower, particularly preferably 65°C or higher and 82°C or lower, and most preferably 70°C or higher and 80°C or lower.

### Item 24.

The resin composition according to any one of Items 1 to 23, wherein
(i) the acid-modified polyolefin resin (A) consists solely of one acid-modified polyolefin resin (a) having a melting point of 90°C or higher and one acid-modified polyolefin resin (b) having a melting point below 90°C, or
(ii) the acid-modified polyolefin resin (A) consists solely of one acid-modified polyolefin resin (a) having a melting point of 90°C or higher and two acid-modified polyolefin resins (b) having melting points below 90°C.

### Item 25.

The resin composition according to any one of Items 1 to 24, wherein the polyurethane resin (B) preferably has a hydroxy group at an end thereof, and more preferably comprises a structural unit derived from a polyol compound and has a hydroxy group at an end thereof.

### Item 26.

The resin composition according to any one of Items 1 to 25, wherein the polyurethane resin (B) preferably has a glass transition temperature (Tg) of 20°C or higher and 100°C or lower, more preferably 25°C or higher and 95°C or lower, and particularly preferably 30°C or higher and 90°C or lower.

### Item 27.

The resin composition according to any one of Items 1 to 26, wherein the content of the polyurethane resin (B) is preferably 25 parts by mass or more and 95 parts by mass or less, more preferably 30 parts by mass or more and 85 parts by mass or less, even more preferably 35 parts by mass or more and 80 parts by mass or less, and particularly preferably 40 parts by mass or more and 75 parts by mass or less, per 100 parts by mass of the acid-modified polyolefin resin (A).

### Item 28.

The resin composition according to any one of Items 1 to 27, wherein the total content of the acid-modified polyolefin resin (A) and the polyurethane resin (B) is preferably more than 50 mass%, 55 mass% or more, 60 mass% or more, 65 mass% or more, 70 mass% or more, 75 mass% more, 80 mass% or more, 85 mass% or more, 90 mass% or more, 92.5 mass% or more, 95 mass% or more, 97.5 mass% or more, 99 mass% or more, 99.5 mass% or more, 99.9 mass% or more, 99.95 mass% or more, or 99.99 mass% or more, based on the total mass of the resin composition, in ascending order of preference.

### Item 29.

An aqueous resin composition comprising
the resin composition of any one of Items 1 to 28 and
an aqueous medium,
wherein the resin composition is dispersed in the aqueous medium.

### Item 30.

A water-based adhesive comprising the aqueous resin composition of Item 29.

### Item 31.

A laminate formed by bonding substrates of different types to each other with the water-based adhesive of Item 30 or bonding substrates of the same type together with the water-based adhesive of Item 30.

### Examples

The present invention is described below in more detail with reference to Examples. However, the scope of the present invention is not limited to these Examples. Below, "room temperature" refers to a temperature within the range of 20°C to 25°C. The "solids concentration of the acid-modified polyolefin resin (A)" refers to the concentration (mass %) of the acid modified polyolefin resin (A) calculated as solids content in an aqueous dispersion. The "solids concentration of the polyurethane resin (B)" refers to the concentration (mass%) of the polyurethane resin (B) calculated as solids content in an aqueous dispersion.

### 1) Measurement of Solids Concentration

The solids concentration (mass%) of the acid-modified polyolefin resin (A) in the aqueous dispersion was measured in the following manner. First, about 1 g of a sample was precisely weighed in a 50 mL glass weighing bottle. The weighing bottle containing the sample was then placed in a hot-air dryer at 120°C and dried for 2 hours. The weighing bottle was removed from the dryer and placed in a desiccator, and then allowed to stand and cool at room temperature for 30 minutes. The weighing bottle was removed from the desiccator, and the mass was precisely weighed. The solids concentration of the acid-modified polyolefin resin (A) was calculated in terms of mass% from changes in mass before and after hot-air drying (according to the formula below). Solids concentration (mass%) = [(mass of the sample before hot air drying) - (mass of the sample after hot air drying)]/(mass of the sample before hot air drying) × 100

### 2) Measurement of Viscosity of Aqueous Dispersion and Aqueous Resin Composition of Acid-modified Polyolefin Resin (A)

0.6 g of each sample was subjected to viscosity measurement with a TV-22 Viscometer (E-type viscometer) produced by Toki Sangyo Co., Ltd., under the following conditions: rotor: No. 0.8° (i.e., 48') × R24, range: H, rotation speed: 5 rpm, temperature: 25°C.

### 3) Measurement of pH of Aqueous Dispersion and Aqueous Resin Composition of Acid-modified Polyolefin Resin (A)

The pH was measured at 25°C using an F-52 pH meter produced by Horiba, Ltd. The measuring device was calibrated by 3-point measurement using a phthalate pH standard solution (pH: 4.01), a neutral phosphate pH standard solution (pH: 6.86), and a borate pH standard solution (pH: 9.18), all produced by Fujifilm Wako Pure Chemical Corporation.

### 4) Measurement of Z-average Particle Size of Aqueous Dispersion and Aqueous Resin Composition of Acid-modified Polyolefin Resin (A)

Using samples prepared by preparing the solids content to a concentration of 0.05 g/L, measurement was performed at 25°C 3 times by using a Zetasizer Nano Nano-ZS Model ZEN3600 produced by Malvern. The average of the three measurements was taken as the Z-average particle size.

### 5) Measurement of Mass average molecular weight (Mw) of Acid-modified Polyolefin Resin (A) in Aqueous Dispersion

The mass average molecular weight of the modified polyolefin (A) was measured by using an Alliance e2695 gel permeation chromatograph produced by Nihon Waters K.K. The conditions for gel permeation chromatography (GPC) were as follows:
Measurement Conditions
- Standard substance: polystyrene resin
- Mobile phase: tetrahydrofuran (THF)
- Columns: Shodex KF-806 and KF-803
- Column temperature: 40°C
- Flow rate: 1.0 ml/minute
- Detector: photodiode array detector (wavelength 254 nm = ultraviolet).

### 6) Measurement of Melting Point of Acid-modified polyolefin resin

### (A) in Aqueous Dispersion

Using a Discovery DSC2500 differential scanning calorimeter produced by TA Instruments Japan Inc., 5.0 mg of each sample was maintained at -50°C for 5 minutes and then heated to 200°C at a temperature rise rate of 10°C/min and maintained at 200°C for 2 minutes to melt the sample; subsequently, the sample was cooled to -50°C at a temperature decrease rate of 10°C/min, maintained at -50°C for 5 minutes, and then heated again to 200°C at a temperature rise rate of 10°C/min to melt the sample. The melting peak temperature thus obtained was taken as the melting point (°C) of the sample.

### 7) Evaluation of Adhesive Strength between Polypropylene (PP) and Olefin Foam (OF) (at 25°C and 100°C)

The resin compositions obtained in the Examples and Comparative Examples were individually applied to a PVC sheet with olefin foam on the sheet (polypropylene : polyethylene = 70 mass% : 30 mass%) with an applicator to form a film with a thickness of 10 µm (when dried). Each coated sheet was then dried in a hot-air dryer at 100°C for 2 minutes and removed from the drier. The coated surface of the sheet removed from the drier was placed on a polypropylene (PP) substrate and pressure-bonded at 150°C and 0.1 MPa for 60 seconds by using a heat seal tester (TP-701-B Heat Seal Tester produced by Tester Sangyo Co., Ltd.), thus preparing each sample for adhesive strength measurement composed of a PVC sheet with olefin foam formed on the sheet, a resin composition, and a PP substrate.

After the prepared samples for adhesive strength measurement were allowed to stand at 25°C for 24 hours, a 10-mm wide incision was made from the side of the PVC sheet with olefin foam. Each sample was pulled vertically at a tensile speed of 200 mm/min using a Tensilon (RTG-1310, produced by A&D Company, Limited) to measure the 180° peel adhesive strength (N/10 mm). The test was conducted 5 times. The average of the five measurements was taken as PP/OF adhesive strength (N/10 mm) at 25°C.

The prepared samples for adhesive strength measurement were allowed to stand at 25°C for 24 hours, then placed in a constant-temperature oven set at 100°C for 5 minutes. Subsequently, each sample was pulled vertically at a tensile speed of 200 mm/min using an autograph (AGX-V, produced by Shimadzu Corporation) to measure the 180° peel adhesive strength (N/10 mm) at 100°C. The test was conducted 5 times. The average of the five measurements was taken as PP/OF adhesive strength (N/10 mm) at 100°C.

The PP/OF adhesive strength (N/10 mm) at 25°C was evaluated according to the following evaluation criteria.
A: The adhesive strength was 10.0 N/10 mm or more, and the olefin foam was destroyed.
B: The adhesive strength was 10.0 N/10 mm or more, and the olefin foam was not destroyed.
C: The adhesive strength was 7.0 N/10 mm or higher and less than 10.0 N/10 mm.
D: The adhesive strength was less than 7.0 N/10 mm.

The PP/OF adhesive strength at 100°C (N/10mm) was evaluated according to the following criteria.
A: The adhesive strength was 5.0 N/10 mm or more, and the olefin foam was destroyed.
B: The adhesive strength was 5.0 N/10 mm or more, and the olefin foam was not destroyed.
C: The adhesive strength was 3.0 N/10 mm or more and less than 5.0 N/10 mm.
D: The adhesive strength was less than 3.0 N/10 mm.

### 8) Evaluation of Adhesive Strength between Polypropylene (PP) and Polyvinyl Chloride (PVC) (at 25°C and 100°C)

The resin compositions obtained in the Example and Comparative Example were individually applied to a bonlex BE sheet (a PVC sheet produced by C.I. TAKIRON Corporation, also referred to below as "PVC") with an applicator to form a film with a thickness of 10 µm (when dried). Each coated sheet was then dried in a hot-air dryer at 100°C for 2 minutes and removed from the drier. The coated surface of the sheet removed from the drier was placed on a polypropylene (PP) substrate and pressure-bonded at 150°C and 0.1 MPa for 60 seconds by using a heat seal tester (TP-701-B Heat Seal Tester produced by Tester Sangyo Co., Ltd.), thus preparing each sample for adhesive strength measurement composed of a PVC sheet, a resin composition, and a PP substrate.

After the obtained samples for adhesive strength measurement were allowed to stand at 25°C for 24 hours, a 10-mm wide incision was made from the side of the bonlex BE sheet. Each sample was pulled vertically at a tensile speed of 200 mm/min using a Tensilon (RTG-1310, produced by A&D Company, Limited) to measure the 180° peel adhesive strength (N/10 mm). The test was conducted 5 times. The average of the five measurements was taken as PP/PVC adhesive strength (N/10 mm) at 25°C.

Further, the prepared samples for adhesive strength measurement were allowed to stand at 25°C for 24 hours and then allowed to stand in a constant temperature oven set at 100°C for 5 minutes. Subsequently, using an autograph (AGX-V, produced by Shimadzu Corporation), each sample was pulled vertically at a tensile speed of 200 mm/min to measure the 180° peel adhesive strength (N/10 mm) at 100°C. The test was conducted 5 times. The average of the 5 measurements was taken as PP/PVC adhesive strength (N/10mm) at 100°C.

The PP/PVC adhesive strength (N/10 mm) at 25°C was evaluated according to the following evaluation criteria.
A: The adhesive strength was 20.0 N/10 mm or more, and PVC was destroyed.
B: The adhesive strength was 20.0 N/10 mm or more, and PVC was not destroyed.
C: The adhesive strength was 15.0 N/10 mm or more and less than 20.0 N/10 mm.
D: The adhesive strength was less than 15.0 N/10 mm.

The PP/PVC adhesive strength (N/10 mm) at 100°C was evaluated according to the following evaluation criteria.
A: The adhesive strength was 6.0 N/10 mm or more, and PVC was destroyed.
B: The adhesive strength was 6.0 N/10 mm or more, and PVC was not damaged.
C: The adhesive strength was 4.0 N/10 mm or more and less than 6.0 N/10 mm.
D: The adhesive strength was less than 4.0 N/10 mm.

### Production Example 1

### Production Example of Acid-modified Polyolefin Resin (A)

### Production Example of Acid-modified Polyolefin Resin (b1)

280 g of a propylene-1-butene copolymer (propylene component: 74 mol%; 1-butene component: 26 mol%), 36.4 g of maleic anhydride, 11.2 g of di-tert-butyl peroxide, and 420 g of toluene were added to an autoclave equipped with a stirrer. After purging with nitrogen for 5 minutes, the reaction was allowed to proceed at 140°C for 3 hours with heating and stirring. After completion of the reaction, the reaction mixture was added to a large amount of methyl ethyl ketone to precipitate resin. The resin was washed several times with methyl ethyl ketone to remove unreacted maleic anhydride. The obtained resin was dried under reduced pressure to obtain solids of an acid-modified polyolefin resin (b1).

### Production Example of Aqueous Dispersion of Acid-modified Polyolefin Resin (A)

### Production Example of Aqueous Dispersion of Acid-modified Polyolefin Resin (b1)

188 g of deionized water, 50 g of acid-modified polyolefin resin (b1) (a propylene-1-butene copolymer (propylene component: 74 mol%; 1-butene component: 26 mol%); grafted amount of maleic anhydride: 1.5 mass%; acid value: 16.5 mgKOH/g; mass average molecular weight: 75000; melting point: 70°C), 70 g of tetrahydrofuran, 5 g of isopropyl alcohol, and 5 g of toluene were placed in a flask with a stirrer. After the temperature was raised to 70°C, the flask was heated at 70°C for 2 hours to dissolve the acid-modified polyolefin resin. Subsequently, 3.3 g of dimethylethanolamine was added. After the resulting mixture was gradually cooled to 40°C over a period of 2 hours, the organic solvent was removed by distillation under a reduced pressure of 91 KPa to obtain a pale-yellow uniform dispersion (an aqueous dispersion of acid-modified polyolefin resin (b1)). The solids concentration of the acid-modified polyolefin resin (b1) in the obtained dispersion was 30.0 mass%. The obtained dispersion had a viscosity at 25°C of 58.2 mPa·s and a pH of 9.4. The Z-average particle size of the acid-modified polyolefin resin (b1) in the aqueous dispersion was 128 nm.

### Production Examples 2 to 4

An acid-modified polyolefin resin (b2) and an aqueous dispersion of the acid-modified polyolefin resin (b2) (Production Example 2), an acid-modified polyolefin resin (a1) and an aqueous dispersion of the acid-modified polyolefin resin (a1) (Production Example 3), and an acid-modified polyolefin resin (a2) and an aqueous dispersion of the acid-modified polyolefin resin (a2) (Production Example 4) were each prepared in the same manner as in Production Example 1, except that the resin formulations shown in Table 1 were used.

Table 1 shows resin formulations of the acid-modified polyolefin resin (A) in aqueous dispersions, properties of the acid-modified polyolefin resin (A) in the aqueous dispersions, and properties of the aqueous dispersions.

**Table 1**

| | | | Resin composition of acid-modified polyolefin resin (A) in aqueous dispersion (mol%) | | | Properties of acid-modified polyolefin resin (A) in aqueous dispersion | | | | Physical properties of aqueous dispersion | | | |
|---|---|---|---|---|---|---|---|---|---|---|---|---|---|
| | | | Ethylene component | Propylene component | 1-Butene component | Grafted amount of maleic anhydride (mass%) | Acid value (mgKOH/g) | Mass average molecular weight | Melting point (°C) | Solids content concentration (mass%) | Viscosity (mPa·s) | pH | z-average particle size (nm) |
| Production Example 1 | | Aqueous dispersion of acid-modified polyolefin resin (b1) | 0 | 74 | 26 | 1.5 | 16.5 | 75000 | 70 | 30.0 | 58.2 | 9.4 | 128 |
| Production Example 2 | Aqueous dispersion of acid-modified polyolefin resin (A) | Aqueous dispersion of acid-modified polyolefin resin (b2) | 0 | 78 | 22 | 1.1 | 12.1 | 90000 | 80 | 30.2 | 42.9 | 9.2 | 135 |
| Production Example 3 | | Aqueous dispersion of acid-modified polyolefin resin (a1) | 0 | 82 | 18 | 1.1 | 12.1 | 90000 | 95 | 30.0 | 45.5 | 9.2 | 139 |
| Production Example 4 | | Aqueous dispersion of acid-modified polyolefin resin (a2) | 3 | 94 | 3 | 1.5 | 16.5 | 75000 | 125 | 30.1 | 51.6 | 9.3 | 130 |

### Example 1

50 g of the aqueous dispersion of the acid-modified polyolefin resin (b1) produced in Production Example 1, 50 g of the aqueous dispersion of the acid-modified polyolefin resin (a1) produced in Production Example 3, and 32 g of Super Flex 150HS (a polyurethane emulsion produced by Dai-ichi Kogyo Seiyaku Co., Ltd.; solids concentration: 38 mass%) as an aqueous dispersion of polyurethane resin (B) were placed into a glass bottle and stirred with a magnetic stirrer at room temperature for 30 minutes to prepare an aqueous resin composition.

### Examples 2 to 20

Using starting materials having the formulations shown in Table 2, aqueous resin compositions were prepared and evaluated in the same manner as in Example 1.

### Example 21

153 g of deionized water, 80 g of the acid-modified polyolefin resin (b1) (a propylene-1-butene copolymer (propylene component: 74 mol%; 1-butene component: 26 mol%); grafted amount of maleic anhydride: 1.5 mass%; acid value: 16.5 mgKOH/g; mass average molecular weight: 75000; melting point: 70°C), 20 g of the acid-modified polyolefin resin (a2) (an ethylene-propylene-1-butene copolymer (ethylene component: 3 mol%; propylene component: 94%; and 1-butene component: 3 mol%); grafted amount of maleic anhydride: 1.5 mass%; acid value: 16.5 mgKOH/g; mass average molecular weight: 75000; melting point: 125°C), 50 g of Takelac W-6110 (a polyurethane dispersion produced by Mitsui Chemicals, Inc.; solids concentration: 32 mass%) as an aqueous dispersion of the polyurethane resin (B), 70 g of tetrahydrofuran, 5 g of isopropyl alcohol, and 5 g of toluene were placed in a flask with a stirrer and heated to 80°C. The mixture was then heated at 80°C for 2 hours to dissolve the acid-modified polyolefin resin (b1), acid-modified polyolefin resin (a2), and Takelac W-6110, thereby obtaining a polyurethane resin (B) and acid-modified polyolefin resin (A) in which the polyurethane resin (B) was bonded to a part of the maleic anhydride-modified moieties of the acid-modified polyolefin resins (b1) and (a2). Subsequently, 5.0 g of dimethylethanolamine was added. After the resulting mixture was cooled to 40°C over a period of 2 hours, the organic solvent was distilled off under a reduced pressure of 91 KPa to obtain a pale-yellow uniform aqueous resin composition (an aqueous dispersion (1) of polyurethane resin (B) and acid-modified polyolefin resin (A)). The obtained aqueous resin composition had a viscosity of 39.8 mPa·s at 25°C, a pH of 8.5, and a Z-average particle size of 143 nm. The obtained aqueous resin composition was evaluated.

### Example 22

An aqueous resin composition (an aqueous dispersion (2) of polyurethane resin (B) and acid-modified polyolefin resin (A)) was obtained in the same manner as in Example 21, except that 50 g of Takelac W-5030 (a polyurethane dispersion produced by Mitsui Chemicals, Inc.; solids concentration: 30 mass%) was used as an aqueous dispersion of polyurethane resin (B). The obtained aqueous resin composition had a viscosity of 37.2 mPa·s at 25°C, a pH of 9.2, and a Z-average particle size of 138 nm. The obtained aqueous resin composition was evaluated.

Table 2 shows the kinds and amounts of starting materials used in Examples 1 to 22, evaluation results of the aqueous resin compositions obtained, etc.

**Table 2**

| | | Unit | Ex. 1 | Ex. 2 | Ex. 3 | Ex. 4 | Ex. 5 |
|---|---|---|---|---|---|---|---|
| Aqueous dispersion of acid-modified polyolefin resin (A) | Aqueous dispersion of acid-modified polyolefin resin (b1) (solids concentration of (b1) = 30.0 mass%, melting point of (b1) = 70°C) | g | 50 | 45 | 20 | 70 | |
| | Aqueous dispersion of acid-modified polyolefin resin (b2) (solids concentration of (b2) = 30.2 mass%, melting point of (b2) = 80°C) | g | | 45 | | | 15 |
| | Aqueous dispersion of acid-modified polyolefin resin (a1) (solids concentration of (a1) = 30.0 mass%, melting point of (a1) = 95°C) | g | 50 | | | | |
| | Aqueous dispersion of acid-modified polyolefin resin (a2) (solids concentration of (a2) = 30.1 mass%, melting point of (a2) = 125°C) | g | | 10 | 80 | 30 | 85 |
| Aqueous dispersion of polyurethane resin (B) | Super Flex 150HS (solids concentration of resin (B) = 38 mass%) | g | 32 | 32 | | | |
| | Takelac W-6110 (solids concentration of resin (B) = 32 mass%) | g | | | 47 | | |
| | Takelac W-5030 (solids concentration of resin (B) = 30 mass%) | g | | | | 70 | |
| | UCOAT UWS-145 (solids concentration of resin (B) = 35 mass%) | g | | | | | 43 |
| Aqueous dispersion (1) of acid-modified polyolefin resin (B) and acid-modified polyolefin resin (A) | | g | | | | | |
| Aqueous dispersion (2) of acid-modified polyolefin resin (B) and acid-modified polyolefin resin (A) g | | g | | | | | |
| Mass of acid-modified polyolefin resin (A) in aqueous dispersion | | g | 30 | 30 | 30 | 30 | 30 |
| Mass of polyurethane resin (B) in aqueous dispersion | | g | 12 | 12 | 15 | 21 | 15 |
| Mass of polyurethane resin (B) in the aqueous dispersion per 100 g of acid-modified polyurethane resin (A) in the aqueous dispersion | | g | 41 | 41 | 50 | 70 | 50 |
| Mass ratio of acid-modified polyolefin resin (a) having a melting point of 90°C or higher to acid- modified polyolefin resin (b) having a melting point below 90°C (resin (a)/resin (b)) | | - | 50/50 | 10/90 | 80/20 | 30/70 | 85/15 |
| Physical properties | Viscosity | mPa·s | 30.1 | 30 | 35.4 | 29.2 | 34.4 |
| | pH | - | 9.0 | 9.0 | 8.9 | 8.9 | 8.7 |
| | Z-average particle size | nm | 115 | 111 | 129 | 108 | 122 |
| Evaluation | PP/OF adhesive strength at 25°C | N/10 mm | 11.2 | 10.3 | 10.9 | 12.1 | 11 |
| | | | A | B | A | A | A |
| | PP/OF adhesive strength at 100°C | N/10 mm | 7.3 | 5.1 | 6.8 | 7.2 | 5.5 |
| | | | A | B | B | A | B |
| | PP/PVC adhesive strength at 25°C | N/10 mm | 24.5 | 25.2 | 25.9 | 26.5 | 26.0 |
| | | | A | A | A | A | A |
| | PP/PVC adhesive strength at 100°C | N/10 mm | 8.0 | 6.3 | 5.1 | 8.1 | 6.9 |
| | | | A | B | C | A | B |

**Table 2 (continued)**

| | | Unit | Ex. 6 | Ex. 7 | Ex. 8 | Ex. 9 | Ex. 10 | Ex. 11 |
|---|---|---|---|---|---|---|---|---|
| Aqueous dispersion of acid-modified polyolefin resin (A) | Aqueous dispersion of acid-modified polyolefin resin (b1) (solids concentration of (b1) = 30.0 mass%, melting point of (b1) = 70°C) | g | 50 | 70 | 70 | 50 | 50 | 50 |
| | Aqueous dispersion of acid-modified polyolefin resin (b2) (solids concentration of (b2) = 30.2 mass%, melting point of (b2) = 80°C) | g | | | | | | |
| | Aqueous dispersion of acid-modified polyolefin resin (a1) (solids concentration of (a1) = 30.0 mass%, melting point of (a1) = 95°C) | g | | | | 50 | 50 | 50 |
| | Aqueous dispersion of acid-modified polyolefin resin (a2) (solids concentration of (a2) = 30.1 mass%, melting point of (a2) = 125°C) | g | 50 | 30 | 30 | | | |
| Aqueous dispersion of polyurethane resin (B) | Super Flex 150HS (solids concentration of resin (B) = 38 mass%) | g | | | | 39 | | |
| | Takelac W-6110 (solids concentration of resin (B) = 32 mass%) | g | 23 | | | | 28 | 47 |
| | Takelac W-5030 (solids concentration of resin (B) = 30 mass%) | g | | 30 | 90 | | | |
| | UCOAT UWS-145 (solids concentration of resin (B) = 35 mass%) | g | | | | | | |
| Aqueous dispersion (1) of acid-modified polyolefin resin (B) and acid-modified polyolefin resin (A) | | g | | | | | | |
| Aqueous dispersion (2) of acid-modified polyolefin resin (B) and acid-modified polyolefin resin (A) | | g | | | | | | |
| Mass of acid-modified polyolefin resin (A) in aqueous dispersion | | g | 30 | 30 | 30 | 30 | 30 | 30 |
| Mass of polyurethane resin (B) in aqueous dispersion | | g | 7 | 9 | 27 | 15 | 9 | 15 |
| Mass of polyurethane resin (B) in the aqueous dispersion per 100 g of acid-modified polyurethane resin (A) in the aqueous dispersion | | g | 25 | 30 | 90 | 49 | 30 | 50 |
| Mass ratio of acid-modified polyolefin resin (a) having a melting point of 90°C or higher to acid- modified polyolefin resin (b) having a melting point below 90°C (resin (a)resin (b)) | | - | 50/50 | 30/70 | 30/70 | 50/50 | 50/50 | 50/50 |
| Physical properties | Viscosity | mPa·s | 31.9 | 29.8 | 27.2 | 29.7 | 34.8 | 35 |
| | pH | - | 9.0 | 8.8 | 8.3 | 9.0 | 9.1 | 9.0 |
| | Z-average particle size | nm | 128 | 128 | 109 | 115 | 130 | 122 |
| Evaluation | PP/OF adhesive strength at 25°C | N/10 mm | 11.9 | 12.2 | 10.5 | 11 | 11.4 | 11.2 |
| | | | A | A | B | A | A | A |
| | PP/OF adhesive strength at 100°C | N/10 mm | 6.9 | 7.2 | 5.4 | 7.3 | 6.6 | 7.2 |
| | | | A | A | B | A | B | B |
| | PP/PVC adhesive strength at 25°C | N/10 mm | 24.4 | 23.3 | 24.9 | 25.3 | 20.2 | 25.2 |
| | | | A | B | A | A | B | A |
| | PP/PVC adhesive strength at 100°C | N/10 mm | 4.8 | 5 | 7.7 | 8.2 | 4.4 | 6.5 |
| | | | C | B | B | A | C | B |

**Table 2 (continued)**

| | | Unit | Ex. 12 | Ex. 13 | Ex. 14 | Ex. 15 | Ex. 16 |
|---|---|---|---|---|---|---|---|
| Aqueous dispersion of acid-modified polyolefin resin (A) | Aqueous dispersion of acid-modified polyolefin resin (b1) (solids concentration of (b1) = 30.0 mass%, melting point of (b1) = 70°C) | g | 50 | 50 | 60 | | |
| | Aqueous dispersion of acid-modified polyolefin resin (b2) (solids concentration of (b2) = 30.2 mass%, melting point of (b2) = 80°C) | g | | | | 50 | 70 |
| | Aqueous dispersion of acid-modified polyolefin resin (a1) (solids concentration of (a1) = 30.0 mass%, melting point of (a1) = 95°C) | g | 50 | 50 | | 50 | 30 |
| | Aqueous dispersion of acid-modified polyolefin resin (b2) (solids concentration of (a2) = 30.1 mass%, melting point of (a2) = 125°C) | g | | | 40 | | |
| Aqueous dispersion of polyurethane resin (B) | Super Flex 150HS (solids concentration of resin (B) = 38 mass%) | g | | | | 32 | |
| | Takelac W-6110 (solids concentration of resin (B) = 32 mass%) | g | 84 | | | | |
| | Takelac W-5030 (solids concentration of resin (B) = 30 mass%) | g | | 50 | 70 | | 70 |
| | UCOAT UWS-145 (solids concentration of resin (B) = 35 mass%) | g | | | | | |
| Aqueous dispersion (1) of acid-modified polyolefin resin (B) and acid-modified polyolefin resin (A) | | g | | | | | |
| Aqueous dispersion (2) of acid-modified polyolefin resin (B) and acid-modified polyolefin resin (A) | | g | | | | | |
| Mass of acid-modified polyolefin resin (A) in aqueous dispersion | | g | 30 | 30 | 30 | 30 | 30 |
| Mass of polyurethane resin (B) in aqueous dispersion | | g | 27 | 15 | 21 | 12 | 21 |
| Mass of polyurethane resin (B) in the aqueous dispersion per 100 g of acid-modified polyurethane resin (A) in the aqueous dispersion | | g | 90 | 50 | 70 | 41 | 70 |
| Mass ratio of acid-modified polyolefin resin (a) having a melting point of 90°C or higher to acid modified polyolefin resin (b) having a melting point below 90°C (resin (a)/resin (b)) | | - | 50/50 | 50/50 | 40/60 | 50/50 | 30/70 |
| Physical properties | Viscosity | mPa·s | 38.6 | 29.3 | 28.7 | 30.5 | 29.2 |
| | pH | - | 8.6 | 8.9 | 8.9 | 9 | 8.8 |
| | Z-average particle size | nm | 103 | 119 | 110 | 109 | 117 |
| Evaluation | PP/OF adhesive strength at 25°C | N/10 mm | 10.8 | 11 | 11.4 | 11.1 | 12.1 |
| | | | B | B | A | A | A |
| | PP/OF adhesive strength at 100°C | N/10 mm | 4.7 | 5.9 | 6.7 | 6.4 | 6.1 |
| | | | C | B | B | B | B |
| | PP/PVC adhesive strength at 25°C | N/10 | 24.8 | 23.5 | 24.6 | 24.3 | 25.9 |
| | | | A | A | A | A | A |
| | PP/PVC adhesive strength at 100°C | N/10 mm | 6.9 | 8 | 7.7 | 8.1 | 7.8 |
| | | | B | A | B | A | A |

**Table 2 (continued)**

| | | Unit | Ex. 17 | Ex. 18 | Ex. 19 | Ex. 20 | Ex. 21 | Ex. 22 |
|---|---|---|---|---|---|---|---|---|
| Aqueous dispersion of acid-modified polyolefin resin (A) | Aqueous dispersion of acid-modified polyolefin resin (b1) (solids concentration of (b1) = 30.0 mass%, melting point of (b1) = 70°C) | g | | 50 | 50 | 70 | | |
| | Aqueous dispersion of acid-modified polyolefin resin (b2) (solids concentration of (b2) = 30.2 mass%, melting point of (b2) = 80°C) | g | 50 | | | | | |
| | Aqueous dispersion of acid-modified polyolefin resin (a1) (solids concentration of (a1) = 30.0 mass%, melting point of (a1) = 95°C) | g | 50 | 50 | 50 | | | |
| | Aqueous dispersion of acid-modified polyolefin resin (b2) (solids concentration of (a2) = 30.1 mass%, melting point of (a2) = 125°C) | g | | | | 30 | | |
| Aqueous dispersion of polyurethane resin (B) | Super Flex 150HS (solids concentration of resin (B) = 38 mass%) | g | 39 | 55 | 71 | | | |
| | Takelac W-6110 (solids concentration of resin (B) = 32 mass%) | g | | | | | | |
| | Takelac W-5030 (solids concentration of resin (B) = 30 mass%) | g | | | | 50 | | |
| | UCOAT UWS-145 (solids concentration of resin (B) = 35 mass%) | g | | | | | | |
| Aqueous dispersion (1) of acid-modified polyolefin resin (B) and acid-modified polyolefin resin (A) | | g | | | | | 100 | |
| Aqueous dispersion (2) of acid-modified polyolefin resin (B) and acid-modified polyolefin resin (A) | | g | | | | | | 100 |
| Mass of acid-modified polyolefin resin (A) in aqueous dispersion | | g | 30 | 30 | 30 | 30 | 30 | 30 |
| Mass of polyurethane resin (B) in aqueous dispersion | | g | 15 | 21 | 27 | 15 | 16 | 15 |
| Mass of polyurethane resin (B) in the aqueous dispersion per 100 g of acid-modified polyurethane resin (A) in the aqueous dispersion | | g | 49 | 70 | 90 | 50 | 53 | 50 |
| Mass ratio of acid-modified polyolefin resin (a) having a melting point of 90°C or higher to acid modified polyolefin resin (b) having a melting point below 90°C (resin (a)/resin (b)) | | - | 50/50 | 50/50 | 50/50 | 30/70 | 20/80 | 20/80 |
| Physical properties | Viscosity | mPa·s | 29.7 | 29.1 | 28.6 | 29.6 | 39.8 | 37.2 |
| | pH | - | 9 | 8.5 | 8.3 | 8.8 | 8.5 | 9.2 |
| | Z-average particle size | nm | 114 | 100 | 91 | 112 | 143 | 138 |
| Evaluation | PP/OF adhesive strength at 25°C | N/10 mm | 11.4 | 10.9 | 10.9 | 11.9 | 11.7 | 11.5 |
| | | | A | A | A | A | A | A |
| | PP/OF adhesive strength at 100°C | N/10 mm | 6.1 | 5.5 | 4.8 | 7.1 | 7.3 | 7.4 |
| | | | B | B | C | A | A | A |
| | PP/PVC adhesive strength at 25°C | N/10 mm | 24.5 | 25.1 | 26 | 26.3 | 25.4 | 25 |
| | | | A | A | A | A | A | A |
| | PP/PVC adhesive strength at 100°C | N/10 mm | 8 | 7.8 | 8.5 | 7.9 | 7.8 | 8.4 |
| | | | A | A | A | B | B | A |

### Comparative Examples 1 to 12

Using starting materials of the formulations shown in Table 3, aqueous resin compositions were prepared and evaluated in the same manner as in Example 1. Table 3 shows kinds and amounts of starting materials used in Comparative Examples 1 to 12, and evaluation results of the aqueous resin compositions obtained.

**Table 3**

| | | Unit | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Aqueous dispersion of acid-modified polyolefin resin (A) | Aqueous dispersion of acid-modified polyolefin resin (b1) (solids concentration of (b1) = 30.0 mass%, melting point of (b1) = 70°C) | g | 100 | | 70 | 70 | 70 | 100 |
| | Aqueous dispersion of acid-modified polyolefin resin (b2) (solids concentration of (b2) = 30.2 mass%, melting point of (b2) = 80°C) | g | | | | | 30 | |
| | Aqueous dispersion of acid-modified polyolefin resin (a1) (solids concentration of (a1) = 30.0 mass%, melting point of (a1) = 95°C) | g | | | | | | |
| | Aqueous dispersion of acid-modified polyolefin resin (b2) (solids concentration of (a2) = 30.1 mass%, melting point of (a2) = 125°C) | g | | 100 | 30 | 30 | | |
| Aqueous dispersion of polyurethane resin (B) | Super Flex 150HS (solids concentration of resin (B) = 38 mass%) | g | | | | | | 39 |
| | Takelac W-6110 (solids concentration of resin (B) = 32 mass%) | g | | | 9 | | | |
| | Takelac W-5030 (solids concentration of resin (B) = 30 mass%) | g | | | | | 50 | |
| | UCOAT UWS-145 (solids concentration of resin (B) = 35 mass%) | g | | | | 111 | | |
| Mass of acid-modified polyolefin resin (A) in aqueous dispersion | | g | 30 | 30 | 30 | 30 | 30 | 30 |
| Mass of polyurethane resin (B) in the aqueous dispersion | | g | 0 | 0 | 2.9 | 38.9 | 15 | 14.8 |
| Mass of polyurethane resin (B) in the aqueous dispersion per 100 g of acid-modified polyurethane resin (A) in the aqueous dispersion | | g | 0 | 0 | 9.7 | 129.7 | 50.0 | 49.3 |
| Mass ratio of acid modified polyolefin resin (a) having a melting point of 90°C or higher to acid modified polyolefin resin (b) having a melting point below 90°C (resin (a)/resin (b)) | | | | | 30/70 | 30/70 | | |
| Physical properties | Viscosity | mPa·s | 58.2 | 51.6 | 44.5 | 26.1 | 31.9 | 33.2 |
| | pH | | 8.8 | 8.8 | 8.7 | 8.3 | 8.8 | 8.8 |
| | Z-average particle size | nm | 121 | 122 | 119 | 101 | 110 | 114 |
| Evaluation | PP/OF adhesive strength at 25°C | N/10 mm | 11.5 | 10.2 | 11.4 | 9.1 | 10.9 | 11.1 |
| | | | A | B | A | C | A | A |
| | PP/OF adhesive strength at 100°C | N/10 mm | 2.1 | 5.2 | 6.9 | 1.9 | 2.8 | 1.9 |
| | | | D | B | A | D | D | D |
| | PP/PVC adhesive strength at 25°C | N/10 mn | 0.0 | 0.0 | 1.2 | 18.7 | 24.4 | 22.1 |
| | | | D | D | D | C | A | B |
| | PP/PVC adhesive strength at 100°C | N/10 mm | 0.0 | 0.0 | 0.0 | 1.8 | 2.9 | 3.0 |
| | | | D | D | D | D | D | D |

**Table 3 (continued)**

| | | Unit | Comp. Ex. 7 | Comp. Ex. 8 | Comp. Ex. 9 | Comp. Ex. 10 | Comp. Ex. 11 | **Comp.** Ex. 12 |
|---|---|---|---|---|---|---|---|---|
| Aqueous dispersion of acid-modified polyolefin resin (A) | Aqueous dispersion of acid-modified polyolefin resin (b1) (solids concentration of (b1) = 30.0 mass%, melting point of (b1) = 70°C) | g | | | 70 | 70 | 70 | 70 |
| | Aqueous dispersion of acid-modified polyolefin resin (b2) (solids concentration of (b2) = 30.2 mass%, melting point of (b2) = 80°C) | g | | | | | | |
| | Aqueous dispersion of acid-modified polyolefin resin (a1) (solids concentration of (a1) = 30.0 mass%, melting point of (a1) = 95°C) | g | | 50 | | | | |
| | Aqueous dispersion of acid-modified polyolefin resin (b2) (solids concentration of (a2) = 30.1 mass%, melting point of (a2) = 125°C) | g | 100 | 50 | 30 | 30 | 30 | 30 |
| Aqueous dispersion of polyurethane resin (B) | Super Flex 150HS (solids concentration of resin (B) = 38 mass%) | g | | | | | 8 | 103 |
| | Takelac W-6110 (solids concentration of resin (B) = 32 mass%) | g | | | | | | |
| | Takelac W-5030 (solids concentration of resin (B) = 30 mass%) | g | 70 | | 10 | 130 | | |
| | UCOAT UWS-145 (solids concentration of resin (B) = 35 mass%) | g | | 43 | | | | |
| Mass of acid-modified polyolefin resin (A) in aqueous dispersion | | g | 30 | 30 | 30 | 30 | 30 | 30 |
| Mass of polyurethane resin (B) in the aqueous dispersion | | g | 21 | 15 | 3 | 39 | 3 | 41 |
| Mass of polyurethane resin (B) in the aqueous dispersion per 100 g of acid-modified polyurethane resin (A) in the aqueous dispersion | | g | 70.0 | 50.0 | 10.0 | 130.0 | 10.0 | 136.7 |
| Mass ratio of acid modified polyolefin resin (a) having a melting point of 90°C or higher to acid modified polyolefin resin (b) having a melting point below 90°C (resin (a)/resin (b)) | | - | - | - | 30/70 | 30/70 | 30/70 | 30/70 |
| Physical properties | Viscosity | mPa·s | 29.4 | 35.1 | 44.9 | 24.9 | 48.4 | 27.8 |
| | pH | | 8.9 | 9.0 | 8.7 | 8.2 | 8.7 | 8.2 |
| | Z-average particle size | nm | 123 | 130 | 132 | 89 | 121 | 94 |
| Evaluation | PP/OF adhesive strength at 25°C | N/10 mm | 9.5 | 10 | 11.1 | 6.7 | 10.7 | 8.6 |
| | | | C | B | A | D | A | C |
| | PP/OF adhesive strength at 100°C | N/10 mm | 7.1 | 4.4 | 6.6 | 2.2 | 7.4 | 1.8 |
| | | | A | C | B | C | A | D |
| | PP/PVC adhesive strength at 25°C | N/10 mm | 13.6 | 14.1 | 1.4 | 19.1 | 0.0 | 21.8 |
| | | | D | D | D | C | D | B |
| | PP/PVC adhesive strength at 100°C | N/10 mm | 4.1 | 3.5 | 1.0 | 2.1 | 0.0 | 1.7 |
| | | | C | D | D | D | D | D |

The starting materials used in the Examples and Comparative Examples are as follows.

### Aqueous Dispersions of Acid-modified Polyolefin Resin (A)

- Aqueous dispersion of acid-modified polyolefin resin (b1) prepared in Production Example 1: the acid-modified polyolefin resin (b1) has a solids concentration of 30.0 mass% and a melting point of 70°C, and the polyolefin resin that constitutes the acid-modified polyolefin resin (b1) is a propylene-1-butene copolymer (propylene component: 74 mol%; 1-butene component: 26 mol%) .
- Aqueous dispersion of acid-modified polyolefin resin (b2) prepared in Production Example 2: the acid-modified polyolefin resin (b2) has a solids content of 30.2 mass% and a melting point of 80°C, and the polyolefin resin that constitutes the acid-modified polyolefin resin (b2) is a propylene-1-butene copolymer (propylene component: 78 mol%; 1-butene component: 22 mol%).
- Aqueous dispersion of acid-modified polyolefin resin (a1) prepared in Production Example 3: the acid-modified polyolefin resin (a1) has a solids concentration of 30.0 mass% and a melting point of 95°C, and the polyolefin resin that constitutes the acid-modified polyolefin resin (a1) is a propylene-1-butene copolymer (propylene component: 82 mol%; 1-butene component: 18 mol%).
- Aqueous dispersion of acid-modified polyolefin resin (a2) prepared in Production Example 4: the acid-modified polyolefin resin (a2) has a solids concentration of 30.1 mass% and a melting point of 125°C, and the polyolefin resin that constitutes the acid-modified polyolefin resin (a2) is an ethylene-propylene-1-butene copolymer (ethylene component: 3 mol%; propylene component: 94 mol%; 1-butene component: 3 mol%).

### Aqueous Dispersions of Polyurethane Resin (B)

- Superflex 150HS: a polyurethane emulsion produced by DKS Co. Ltd.; solids concentration: 38 mass%, Tg: 32°C, ester-ether
- Takelac W-6110: a polyurethane dispersion produced by Mitsui Chemicals, Inc.; solids concentration: 32 mass%, Tg: -20°C, carbonate
- Takelac W-5030: a polyurethane dispersion produced by Mitsui Chemicals, Inc.; solids concentration: 30 mass%, Tg: 85°C, ester
- Yucoat UWS-145: a urethane emulsion produced by Sanyo Chemical Industries, Ltd.; solids concentration: 35 mass%, Tg: -45°C, ester-based.

### Discussion of Results in Tables 2 and 3

The results of Examples 1 to 22 show high PP/OF adhesive strength and high PP/PVC adhesive strength at 25°C as well as sufficient PP/OF adhesive strength and sufficient PP/PVC adhesive strength at 100°C. Accordingly, the aqueous resin compositions obtained in Examples 1 to 22 were confirmed to have:
(I) high adhesive strength at 25°C and sufficient adhesive strength even at 100°C; and
(II) good adhesion between a polyolefin substrate and a substrate of a type different from the polyolefin substrate and good adhesion between a polyolefin substrate and a substrate of the same type as the polyolefin substrate.

In contrast, the results of Comparative Examples 1 to 3, 9, and 11 show that since no or only a small amount of polyurethane resin (B) was used relative to the acid-modified polyolefin resin (A), significantly poor adhesive strength between a polyolefin substrate and a substrate of a type different from the polyolefin substrate was exhibited.

The results of Comparative Examples 4, 10, and 12 show that since an excess of polyurethane resin (B) relative to the acid-modified polyolefin resin (A) was used, significantly poor adhesive strength was exhibited at 100°C.

The results of Comparative Examples 5 and 6 show that because no acid-modified polyolefin resin (a) having a melting point of 90°C or higher was used, significantly poor adhesive strength was exhibited at 100°C.

The results of Comparative Examples 7 and 8 show that because no acid-modified polyolefin resin (b) having a melting point below 90°C was used, significantly poor adhesive strength between a polyolefin substrate and a substrate of a type different from the polyolefin substrate was exhibited at 25°C.

## Claims

1. A resin composition comprising
an acid-modified polyolefin resin (A) and
a polyurethane resin (B),
wherein the content of the polyurethane resin (B) is 20 parts by mass or more and 100 parts by mass or less per 100 parts by mass of the acid-modified polyolefin resin (A), and
wherein the acid-modified polyolefin resin (A) comprises an acid-modified polyolefin resin (a) having a melting point of 90°C or higher and an acid-modified polyolefin resin (b) having a melting point below 90°C.

2. The resin composition according to claim 1, wherein the ratio by mass of the acid-modified polyolefin resin (a) to the acid-modified polyolefin resin (b) (the acid-modified polyolefin resin (a) / the acid-modified polyolefin resin (b)) is in the range of 10/90 to 80/20.

3. The resin composition according to claim 1, wherein the difference in melting points between the acid-modified polyolefin resin (a) and the acid-modified polyolefin resin (b) is 5°C or higher.

4. The resin composition according to claim 1, wherein the acid-modified polyolefin resin (a) and the acid-modified polyolefin resin (b) comprise an α-olefin component.

5. The resin composition according to claim 1, wherein the polyolefin resin that constitutes the acid-modified polyolefin resin (b) is a propylene-1-butene copolymer.

6. The resin composition according to claim 1, wherein an ethylene component content of the acid-modified polyolefin resin (a) is 10 mol% or less.

7. The resin composition according to claim 1, wherein the polyurethane resin (B) has an ester bond or a carbonate ester bond.

8. An aqueous resin composition comprising
the resin composition of any one of claims 1 to 7 and
an aqueous medium,
wherein the resin composition is dispersed in the aqueous medium.

9. A water-based adhesive comprising the aqueous resin composition of claim 8.

10. A laminate formed by bonding substrates of different types to each other with the water-based adhesive of claim 9 or bonding substrates of the same type to each other with the water-based adhesive of claim 9.
